# EUROPÄISCHE PATENTSCHRIFT

(11) **EP 1 375 083 B1**
(45) Veröffentlichungstag und Bekanntmachung des Hinweises auf die Patenterteilung: **18.02.2009**
(21) Anmeldenummer: 02015338.3
(22) Anmeldetag: 10.07.2002
(51) Int. Cl.: B25J 9/16

(54) **Verfahren zur Bestimmung der relativen Orientierung einer Roboter-Verfahrachse gegenüber einem Roboter-Koordinatensystem**
Method for the determination of the relative orientation of a robot travelling axis in relation to a robot coordinate system
Procédé pour déterminer l'orientation relative de l'axe de déplacement d'un robot par rapport au système de coordonnées du robot

(30) Priorität: 29.06.2002 DE 10229293
(43) Veröffentlichungstag der Anmeldung: 02.01.2004
(73) Patentinhaber: TECMEDIC GmbH, 45897 Gelsenkirchen (DE)
(72) Erfinder: Lilienthal, Angela, Dipl.-Ing., 45143 Essen (DE); NEDDERMEYER, Werner, 64367 Mühltal (DE)
(74) Vertreter: Mierswa, Klaus

(56) Entgegenhaltungen:
- WO-A-01/00370
- DE-A1- 4 433 233
- DE-A1- 10 112 653
- US-A- 4 590 578

## Beschreibung

### Technisches Gebiet:

Die Erfindung betrifft Verfahren zur Bestimmung der relativen winkelmäßigen Orientierung einer Roboter-Verfahrachse gegenüber einem ersten Roboter-Koordinatensystem, welches auf einen zwischen zwei voneinander beabstandeten Standorten entlang der Roboter-Verfahrachse translatorisch verfahrbaren Roboter dann bezogen ist, wenn dieser sich an einem ersten Standort befindet, und welches in ein zweites Roboter-Koordinatensystem übergeht, wenn sich der Roboter am zweiten Standort befindet, gemäß den Oberbegriffen von Anspruch 1 und 2.

### Stand der Technik:

Viele in der Industrie eingesetzte Roboter sind entlang einer Verfahrachse eindimensional verfahrbar, um z.B. voneinander entfernte Stellen eines größeren Werkstücks wie etwa einer Kfz-Rohkarosserie erreichen zu können. Die Verfahrachse kann z.B. eine Schiene sein, auf welcher der Roboter über eine gewisse Strecke hinweg hin- und herfahren kann. Derartige Roboter besitzen einen Arm, welcher zur Ausführung einer bestimmten Arbeit an einen bestimmten Zielpunkt des Werkstücks gesteuert werden kann. Hierzu fährt der Roboter zunächst einen bestimmten, in der Nähe des Zielpunktes gelegenen Standort entlang der Verfahrachse an und verharrt dort. Von diesem Standort aus steuert der Roboter dann mit seinem Arm den Zielpunkt an. Hierzu müssen dem Roboter die auf ihn bezogenen Koordinaten des Zielpunktes bekannt sein, d.h. die Koordinaten beziehen sich auf ein Roboter-Koordinatensystem, welches bei Verfahren des Roboters entlang der Schiene mit demselben mitbewegt wird.

Um eine hohe Positionierungsgenauigkeit des Armes erreichen zu können, muß die relative Orientierung der Verfahrachse gegenüber dem Roboter-Koordinatensystem bekannt sein.

Eine herkömmliche Methode, diese relative Orientierung zu bestimmen, besteht darin, mit dem Arm einen Zielpunkt anzusteuern, welcher so gewählt ist, daß der Arm bei Erreichen dieses Zielpunktes möglichst parallel zur Richtung der Verfahrachse ausgerichtet ist, und davon auszugehen, daß in diesem Fall die Orientierung des Armes und der Verfahrachse identisch sind. Die Orientierung der Verfahrachse, bezogen auf das Roboter-Koordinatensystem, folgt dann aus den Koordinaten des Zielpunktes. Die Parallelität von Roboterarm und Verfahrachse wird dabei per Augenmaß oder durch optische Peilung festgestellt. Nachteilig bei dieser Methode ist, daß nur eine geringe Genauigkeit erreicht wird, was relativ große Positionierungsfehler bei der Arbeit am Werkstück nach sich zieht. Ein weiterer Nachteil dieser Methode besteht darin, daß nur ein relativ kurzer Abschnitt der Verfahrachse erfaßt wird.

Eine andere Methode besteht darin, den Roboter zunächst an einem bestimmten Standort entlang der Verfahrachse zu positionieren und den Arm von dort aus eine bestimmte ortsfeste Zielmarke, z.B. eine auf dem Boden aufgemalte Markierung, ansteuern zu lassen. Wenn der Arm diese Zielmarke erreicht hat, entsprechen die Koordinaten, mit welchen der Arm angesteuert wird, der Position der Zielmarke vom Standort des Roboters aus gesehen, d.h. die diesem Standort entsprechende Position der Zielmarke ist dann im Roboter-Koordinatensystem bekannt.

Anschließend wird der Roboter an einen anderen Standort entlang der Verfahrachse verfahren. Die Zielmarke nimmt von diesem neuen Standort aus gesehen eine andere Position im Roboter-Koordinatensystem ein. Wiederum wird die Zielmarke mit dem Arm angesteuert. Wenn der Arm die Zielmarke erreicht hat, ist auch ihre dem neuen Standort entsprechende Position im Roboter-Koordinatensystem bekannt.

Aus den so nacheinander in Abhängigkeit vom Standort ermittelten Positionen der Zielmarke im Roboter-Koordinatensystem einerseits und dem Verfahrweg zwischen dem alten und dem neuen Standort andererseits läßt sich die relative Orientierung zwischen Roboter-Koordinatensystem und Verfahrachse bestimmen. Nachteilig hierbei ist, daß der Abstand zwischen den beiden Standorten das Doppelte der Reichweite des Arms nicht übersteigen darf, wodurch der Genauigkeit der Methode enge Grenzen gesetzt sind, sowie der mit dieser Methode verbundene relativ hohe Zeitaufwand. Des weiteren wird mit dieser Methode ebenfalls nur ein begrenzter Abschnitt der Verfahrachse erfaßt.

Die WO 01 / 00370 offenbart ein Verfahren zum Kalibrieren von Manipulatoren und mitgeführten optischen Messeinrichtungen, z.B. von mehrachsigen Messrobotern mit 3D-Sensoren, innerhalb einer Meßstation für Werkstücke, welche insbesondere Fahrzeugrohkarosserien sein können. Die Kalibrierung erfolgt in einer Meßkaskade mit mindestens drei Kalibrierschritten. Nacheinander werden die optische Messeinrichtung, der Manipulator und dann die Zuordnung des Manipulators zum Werkstück kalibriert.

Der Erfindung liegt daher die Aufgabe zu Grunde, Verfahren anzugeben, welches eine Bestimmung der relativen Orientierung einer Roboter-Verfahrachse gegenüber dem Roboter-Koordinatensystem mit einer gegenüber herkömmlichen Verfahren wesentlich erhöhten Genauigkeit und geringerem Zeitaufwand erlaubt.

### Offenbarung der Erfindung und ihrer Vorteile:

Diese Aufgabe wird erfindungsgemäß gelöst durch ein Verfahren zur Bestimmung der relativen winkelmäßigen Orientierung einer Roboter-Verfahrachse gegenüber einem ersten Roboter-Koordinatensystem, welches auf einen zwischen zwei voneinander beabstandeten Standorten entlang der Roboter-Verfahrachse translatorisch verfahrbaren Roboter dann bezogen ist, wenn dieser sich an einem ersten Standort befindet, und welches in ein zweites Roboter-Koordinatensystem übergeht, wenn sich der Roboter am zweiten Standort befindet, wobei auf ein außerhalb des Roboters angeordnetes Koordinaten-Meßgerät ein vom Roboter unabhängiges, ortsfestes Welt-Koordinatensystem bezogen ist, gegenüber welchem das erste bzw. zweite Roboter-Koordinatensystem winkelmäßig eine erste bzw. zweite Relativorientierung und lateral eine erste bzw. zweite Relativposition aufweist, wobei
a) dem ersten Standort mindestens drei voneinander beabstandete erste Aufpunkte zugeordnet werden, deren Koordinaten im ersten Roboter-Koordinatensystem vorgegeben sind oder gemessen werden,
b) die Positionen der ersten Aufpunkte mittels des Koordinaten-Meßgerätes bezüglich des Welt-Koordinatensystems gemessen werden und aus den so erhaltenen Meßergebnissen die erste Relativorientierung und die erste Relativposition bestimmt werden,
c) dem zweiten Standort mindestens ein zweiter Aufpunkt zugeordnet wird, dessen Koordinaten in dem zweiten Roboter-Koordinatensystem vorgegeben sind oder gemessen werden,
d) die Position des zweiten Aufpunktes bzw. der zweiten Aufpunkte mittels des Koordinaten-Meßgerätes bezüglich des Welt-Koordinatensystems gemessen wird und mit Hilfe der so erhaltenen Meßergebnisse die zweite Relativposition unter der Annahme bestimmt wird, daß die erste und die zweite Relativorientierung miteinander identisch sind,
e) die Orientierung der Verfahrachse im Welt-Koordinatensystem aus dem Vergleich ersten und der zweiten Relativposition bestimmt wird, und
f) aus der so erhaltenen Orientierung der Verfahrachse im Welt-Koordinatensystem sowie der ersten Relativorientierung die relative Orientierung der Verfahrachse gegenüber dem ersten Roboter-Koordinatensystem bestimmt wird.

Gemäß einem Verfahren zur Bestimmung der relativen winkelmäßigen Orientierung einer Roboter-Verfahrachse gegenüber einem ersten Roboter-Koordinatensystem, welches auf einen zwischen zwei voneinander beabstandeten Standorten entlang der Roboter-Verfahrachse translatorisch verfahrbaren Roboter dann bezogen ist, wenn dieser sich an einem ersten Standort befindet, und welches in ein zweites Roboter-Koordinatensystem übergeht, wenn sich der Roboter am zweiten Standort befindet, dadurch gekennzeichnet, daß auf ein außerhalb des Roboters angeordnetes Koordinaten-Meßgerät ein vom Roboter unabhängiges, ortsfestes Welt-Koordinatensystem bezogen ist, gegenüber welchem das erste bzw. zweite Roboter-Koordinatensystem winkelmäßig eine erste bzw. zweite Relativorientierung und lateral eine erste bzw. zweite Relativposition aufweist, werden folgende Schritte ausgeführt:
a) dem ersten Standort mindestens drei voneinander beabstandete erste Aufpunkte zugeordnet werden, deren Koordinaten im ersten Roboter-Koordinatensystem vorgegeben sind oder gemessen werden,
b) die Positionen der ersten Aufpunkte mittels des Koordinaten-Meßgerätes bezüglich des Welt-Koordinatensystems gemessen werden und aus den so erhaltenen Meßergebnissen die erste Relativorientierung und die erste Relativposition bestimmt werden,
c) dem zweiten Standort mindestens ein zweiter Aufpunkt zugeordnet wird, dessen Koordinaten in dem zweiten Roboter-Koordinatensystem vorgegeben sind oder gemessen werden,
d) die Position des zweiten Aufpunktes bzw. der zweiten Aufpunkte mittels des Koordinaten-Meßgerätes bezüglich des Welt-Koordinatensystems gemessen wird und mit Hilfe der so erhaltenen Meßergebnisse die zweite Relativposition bestimmt wird,
e) die Orientierung der Verfahrachse im Welt-Koordinatensystem aus dem Vergleich ersten und der zweiten Relativposition bestimmt wird, und
f) aus der so erhaltenen Orientierung der Verfahrachse im Welt-Koordinatensystem sowie der ersten Relativorientierung die relative Orientierung der Verfahrachse gegenüber dem ersten Roboter-Koordinatensystem bestimmt wird.

Die Aufgabe wird fener gelöst durch ein Verfahren zur Bestimmung der relativen winkelmäßigen Orientierung einer Roboter-Verfahrachse gegenüber einem ersten Roboter-Koordinatensystem, welches auf einen zwischen zwei voneinander beabstandeten Standorten entlang der Roboter-Verfahrachse translatorisch verfahrbaren Roboter dann bezogen ist, wenn dieser sich an einem ersten Standort befindet, und welches in ein zweites Roboter-Koordinatensystem übergeht, wenn sich der Roboter am zweiten Standort befindet, wobei auf ein außerhalb des Roboters angeordnetes Koordinaten-Meßgerät ein vom Roboter unabhängiges, ortsfestes Welt-Koordinatensystem bezogen ist, gegenüber welchem das erste bzw. zweite Roboter-Koordinatensystem winkelmäßig eine erste bzw. zweite Relativorientierung und lateral eine erste bzw. zweite Relativposition aufweist, wobei
a) dem ersten Standort mindestens drei voneinander beabstandete erste Aufpunkte zugeordnet werden, deren Koordinaten im ersten Roboter-Koordinatensystem vorgegeben sind oder gemessen werden,
b) die Positionen der ersten Aufpunkte mittels des Koordinaten-Meßgerätes bezüglich des Welt-Koordinatensystems gemessen werden und aus den so erhaltenen Meßergebnissen die erste Relativorientierung und die erste Relativposition bestimmt werden,
c) dem zweiten Standort mindestens drei zweite Aufpunkte zugeordnet werden, deren Koordinaten in dem zweiten Roboter-Koordinatensystem vorgegeben sind oder gemessen werden,
d) die Positionen der zweiten Aufpunkte mittels des Koordinaten-Meßgerätes bezüglich des Welt-Koordinatensystems gemessen werden, wobei aus den so erhaltenen Meßergebnissen die zweite Relativorientierung und die zweite Relativposition bestimmt werden,
e) die Orientierung der Verfahrachse im Welt-Koordinatensystem aus dem Vergleich ersten und der zweiten Relativposition bestimmt wird, und
f) aus der so erhaltenen Orientierung der Verfahrachse im Welt-Koordinatensystem sowie der ersten Relativorientierung die relative Orientierung der Verfahrachse gegenüber dem ersten Roboter-Koordinatensystem bestimmt wird.

Auf den Roboter ist ein Roboter-Koordinatensystem bezogen, welches mit diesem mitbewegt wird und in das erste bzw. zweite Roboter-Koordinatensystem übergeht, wenn der Roboter sich am ersten bzw. zweiten Standort befindet. Das erste und das zweite Roboter-Koordinatensystem weisen im Regelfall unterschiedliche Orientierungen auf, so daß die erste und die zweite Relativorientierung verschieden sind. Falls die Verfahrachse jedoch in guter Näherung geradlinig und verwindungsfrei ist, können erste und die zweite Relativorientierung näherungsweise miteinander identisch sein, so daß das erste und das zweite Roboter-Koordinatensystem im wesentlichen lediglich gegeneinander lateral verschoben, nicht jedoch gegeneinander verdreht sind.

In der Regel weist der Roboter einen dreidimensional verfahrbaren Arm auf, so daß der Arm innerhalb eines bestimmten Aktionsradius beliebige Zielpunkte im Raum anfahren kann, wobei die Koordinaten des angefahrenen Zielpunktes im Roboter-Koordinatensystem bekannt bzw. auslesbar sind. Die Spitze des Armes kann mit einer Markierung versehen sein, welche durch das Koordinaten-Meßgerät erfaßbar ist, wobei die Position der Markierung der Position des vom Arm angesteuerten Zielpunktes entspricht. Die Markierung kann z.B. eine sich vom Hintergrund farblich abhebende kleine Kugel oder eine Leuchtdiode sein.

Gegenstand der Erfindung ist somit die Erfassung der Richtung der Verfahrachse gegenüber dem ersten Roboter-Koordinatensystem durch ein vom Robotersystem abgekoppeltes Koordinaten-Meßgerät. Mit Hilfe der Erfindung kann die Achsrichtung im kartesischen Raum unter Berücksichtigung des ersten Roboter-Koordinatensystems festgestellt und zur korrekten Koordinatenberechnung der vom Roboterarm anzusteuernden Zielpunkte zur Verfügung gestellt werden. Damit ist es der Robotersteuerung möglich, den Verfahrweg richtig in das Roboter-Koordinatensystem zu integrieren und somit Orientierungsfehler zu eliminieren.

Gemäß einer Variante dieses Verfahrens wird folgendermaßen vorgegangen:

Zunächst wird der Roboter an den ersten Standort verfahren. Das Roboter-Koordinatensystem geht somit in das erste Roboter-Koordinatensystem über. Es werden gemäß Verfahrensschritt a) mindestens drei erste Aufpunkte ausgewählt und dem ersten Standort zugeordnet, wobei diese nicht auf einer Geraden liegen. Die Koordinaten der ersten Aufpunkte im ersten Roboter-Koordinatensystem sind entweder vorgegeben, d.h. die Auswahl der ersten Aufpunkte erfolgt durch Vorgabe bestimmter Koordinaten ersten Roboter-Koordinatensystem, oder Koordinaten der ersten Aufpunkte werden im ersten Roboter-Koordinatensystem gemessen, z.B. indem der Arm dieselben nacheinander anfährt und die zugehörigen Koordinaten ausgelesen werden.

Die so gewählten ersten Aufpunkte werden nacheinander mit dem Arm angefahren und die jeweilige Position der Markierung mit dem Koordinaten-Meßgerät ermittelt, d.h. es werden die Koordinaten der ersten Aufpunkte im Welt-Koordinatensystem gemessen, Verfahrensschritt b).

Somit sind die Koordinaten, d.h. die Positionen von mindestens drei ersten Aufpunkten sowohl im ersten Roboter- als auch im Welt-Koordinatensystem bekannt. Daher kann die winkelmäßige Orientierung des ersten Roboter-Koordinatensystems gegenüber dem Welt-Koordinatensystem, d.h. die erste Relativorientierung, rechnerisch z.B. durch eine Koordinaten-Transformation bestimmt werden. Zur Bestimmung der ersten Relativorientierung sind mindestens drei erste Aufpunkte erforderlich; werden mehr als drei Aufpunkte auf die genannte Weise eingemessen, so ist die genannte Koordinatentransformation mathematisch überbestimmt; die redundanten Ergebnisse lassen sich jedoch vorteilhaft zur Verringerung des mittleren Fehlers und damit zur Erhöhung der erzielten Genauigkeit kombinieren.

Aus der so erhaltenen ersten Relativorientierung und der Lage mindestens eines der ersten Aufpunkte im ersten Roboter-Koordinatensystem wird die laterale Lage dieses Koordinatensystems im Welt-Koordinatensystem bestimmt. Da die Koordinaten der Aufpunkte im Welt-Koordinatensystem aufgrund der oben erläuterten Messung bekannt sind, kann die Lage jedes Punktes im ersten Roboter-Koordinatensystem auf das Welt-Koordinatensystem umgerechnet und damit die erste Relativposition bestimmt werden.

Anschließend wird der Roboter gemäß dieser Variante des erfindungsgemäßen Verfahrens an den zweiten Standort verfahren, so daß das Roboter-Koordinatensystem in das zweite Roboter-Koordinatensystem übergeht.

Gemäß einer Untervariante werden im Verfahrensschritt c) dem zweiten Standort mindestens drei zweite Aufpunkte zugeordnet, deren Koordinaten im zweiten Roboter-Koordinatensystem vorgegeben sind oder gemessen werden, z.B. in der oben erläuterten Weise durch Ansteuern der zweiten Aufpunkte mit dem Roboterarm vom zweiten Standort aus, und deren Positionen mittels des Koordinaten-Meßgerätes auch bezüglich des Welt-Koordinatensystems gemessen werden, wobei aus den so erhaltenen Meßergebnissen die zweite Relativorientierung und die zweite Relativposition bestimmt werden, Verfahrensschritt d).

Bevorzugt wird die erste Relativposition dadurch bestimmt, daß aus den Positionen der ersten Aufpunkte bezüglich des Welt-Koordinatensystems die Lage des Ursprungs des ersten Roboter-Koordinatensystems im Welt-Koordinatensystem berechnet wird. Ebenso kann die zweite Relativposition bestimmt werden, indem aus der Position des zweiten Aufpunktes bzw. aus den Positionen der zweiten Aufpunkte bezüglich des Welt-Koordinatensystems die Lage des Ursprungs des zweiten Roboter-Koordinatensystems im Welt-Koordinatensystem berechnet wird.

D.h., die Lage der Ursprünge des ersten und des zweiten Roboter-Koordinatensystem werden auf das Welt-Koordinatensystem umgerechnet und damit die erste und die zweite Relativposition bestimmt.

Gemäß einer anderen, vereinfachten Untervariante wird im Verfahrensschritt c) nur ein zweiter Aufpunkt ausgewählt, welcher dem zweiten Standort zugeordnet wird und dessen Koordinaten im zweiten Roboter-Koordinatensystem vorgegeben sind oder gemessen werden. Die Koordinaten des zweiten Aufpunktes werden wiederum mittels des Koordinaten-Meßgerätes auch bezüglich des Welt-Koordinatensystems gemessen, Verfahrensschritt d). Mit Hilfe der so erhaltenen Meßergebnisse wird die zweite Relativposition bestimmt, beispielsweise indem mit Hilfe dieser Meßergebnisse die Koordinaten des Ursprungs des zweiten Roboter-Koordinatensystems auf das Welt-Koordinatensystem umgerechnet werden.

Da jedoch nur ein einziger zweiter Aufpunkt verwendet wurde, kann die zweite Relativorientierung bei dieser Untervariante des erfindungsgemäßen Verfahrens nicht mit dem Koordinaten-Meßgerät erfaßt werden. Jedoch kann die zweite Relativposition unter der Annahme bestimmt werden, daß die erste und die zweite Relativorientierung miteinander identisch sind; diese Annahme stellt insbesondere dann eine gute Näherung dar, wenn die Verfahrachse im wesentlichen geradlinig und verwindungsfrei ist, so daß die erste und die zweite Relativorientierung näherungsweise miteinander identisch und das erste und das zweite Roboter-Koordinatensystem im wesentlichen lediglich gegeneinander lateral verschoben sind. Eine andere Möglichkeit besteht darin, die Verwindung der Schiene z.B. mittels Wasserwaage oder anderer zusätzlicher Hilfsmittel zu bestimmen und hieraus die zweite Relativorientierung abzuleiten.

Da nun die Lage der Ursprünge des ersten und des zweiten Roboter-Koordinatensystems im Welt-Koordinatensystem, d.h. die erste und die zweite Relativposition bekannt sind, kann die winkelmäßige Orientierung der Verfahrachse im Welt-Koordinatensystem gemäß Verfahrensschritt e) aus dem Vergleich ersten und der zweiten Relativposition bestimmt werden, da die Verfahrachse im Mittel parallel zur Verbindungslinie der beiden Ursprünge verläuft.

Aus der so erhaltenen Orientierung der Verfahrachse im Welt-Koordinatensystem und aus der ersten Relativorientierung wird nun die gesuchte relative winkelmäßige Orientierung der Verfahrachse gegenüber dem ersten Roboter-Koordinatensystem errechnet, Verfahrensschritt f).

Die relative winkelmäßige Orientierung der Verfahrachse gegenüber dem ersten Roboter-Koordinatensystem wurde somit aus der Orientierung des ersten Roboter-Koordinatensystems gegenüber dem Welt-Koordinatensystem sowie aus der Lage der Ursprünge des ersten und des zweiten Roboter-Koordinatensystem, jeweils bezogen auf das Welt-Koordinatensystem, bestimmt.

Es ist nicht zwingend erforderlich, daß die ersten Aufpunkte sowohl zur Ermittlung der ersten Relativorientierung als auch zur Ermittlung der ersten Relativposition herangezogen werden. Vielmehr können selbstverständlich zur Ermittlung der ersten Relativorientierung andere Aufpunkte benutzt werden als zur Ermittlung der ersten Relativposition.

Daher kann dem ersten Standort ferner mindestens ein dritter Aufpunkt zugeordnet werden, dessen bzw. deren Koordinaten im ersten Roboter-Koordinatensystem vorgegeben sind oder gemessen werden, und im Verfahrensschritt b) die Position des dritten Aufpunktes bzw. der dritten Aufpunkte mittels des Koordinaten-Meßgerätes bezüglich des Welt-Koordinatensystems gemessen wird und die erste Relativposition, anstatt aus den Positionen der ersten Aufpunkte bestimmt zu werden, mit Hilfe der Position des dritten Aufpunktes bzw. der Positionen der dritten Aufpunkte bezüglich des Welt-Koordinatensystems bestimmt wird. Vorzugsweise wird auch der dritte Aufpunkt bzw. die dritten Aufpunkte dazu benutzt, die Lage des Ursprungs des ersten Roboter-Koordinatensystem im Welt-Koordinatensystem festzustellen.

Die Aufgabe wird ferner gelöst durch ein Verfahren zur Bestimmung der relativen winkelmäßigen Orientierung einer Roboter-Verfahrachse gegenüber einem ersten Roboter-Koordinatensystem, welches auf einen zwischen zwei voneinander beabstandeten Standorten entlang der Roboter-Verfahrachse translatorisch verfahrbaren Roboter dann bezogen ist, wenn dieser sich an einem ersten Standort befindet, und welches in ein zweites Roboter-Koordinatensystem übergeht, wenn sich der Roboter am zweiten Standort befindet, wobei auf ein außerhalb des Roboters angeordnetes Koordinaten-Meßgerät ein vom Roboter unabhängiges, ortsfestes Welt-Koordinatensystem bezogen ist, gegenüber welchem das erste bzw. zweite Roboter-Koordinatensystem winkelmäßig eine erste bzw. zweite Relativorientierung und lateral eine erste bzw. zweite Relativposition aufweist, wobei
a) dem ersten Standort mindestens drei voneinander beabstandete erste Aufpunkte zugeordnet werden, deren Koordinaten im ersten Roboter-Koordinatensystem vorgegeben sind oder gemessen werden, und dem ersten Standort ferner mindestens ein dritter Aufpunkt zugeordnet wird, dessen bzw. deren Koordinaten im ersten Roboter-Koordinatensystem vorgegeben sind oder gemessen werden,
b) die Positionen der ersten Aufpunkte mittels des Koordinaten-Meßgerätes bezüglich des Welt-Koordinatensystems gemessen werden und aus den so erhaltenen Meßergebnissen die erste Relativorientierung bestimmt wird, und die Position des dritten Aufpunktes bzw. der dritten Aufpunkte mittels des Koordinaten-Meßgerätes bezüglich des Welt-Koordinatensystems (WKS) gemessen wird und die erste Relativposition mit Hilfe der Position des dritten Aufpunktes bzw. der Positionen der dritten Aufpunkte bezüglich des Welt-Koordinatensystems bestimmt wird,
c) dem zweiten Standort mindestens ein zweiter Aufpunkt zugeordnet wird, dessen Koordinaten in dem zweiten Roboter-Koordinatensystem vorgegeben sind oder gemessen werden,
d) die Position des zweiten Aufpunktes bzw. der zweiten Aufpunkte mittels des Koordinaten-Meßgerätes bezüglich des Welt-Koordinatensystems gemessen wird und mit Hilfe der so erhaltenen Meßergebnisse die zweite Relativposition bestimmt wird,
e) die Orientierung der Verfahrachse im Welt-Koordinatensystem aus dem Vergleich ersten und der zweiten Relativposition bestimmt wird, und
f) aus der so erhaltenen Orientierung der Verfahrachse im Welt-Koordinatensystem sowie der ersten Relativorientierung die relative Orientierung der Verfahrachse gegenüber dem ersten Roboter-Koordinatensystem bestimmt wird.

Ferner kann mindestens einer der dritten Aufpunkte mit mindestens einem der ersten Aufpunkte identisch sein, d.h. die Menge der ersten Aufpunkte kann sich mit der Menge der dritten Aufpunkte beliebig überschneiden.

Die Aufgabe wird ferner gelöst durch ein Verfahren zur Bestimmung der relativen winkelmäßigen Orientierung einer Roboter-Verfahrachse gegenüber einem ersten Roboter-Koordinatensystem, welches auf einen zwischen zwei voneinander beabstandeten Standorten entlang der Roboter-Verfahrachse translatorisch verfahrbaren Roboter dann bezogen ist, wenn dieser sich an einem ersten Standort befindet, und welches in ein zweites Roboter-Koordinatensystem übergeht, wenn sich der Roboter am zweiten Standort befindet, dadurch gekennzeichnet, daß auf ein außerhalb des Roboters angeordnetes Koordinaten-Meßgerät ein vom Roboter unabhängiges, ortsfestes Welt-Koordinatensystem bezogen ist, gegenüber welchem das erste bzw. zweite Roboter-Koordinatensystem winkelmäßig eine erste bzw. zweite Relativorientierung und lateral eine erste bzw. zweite Relativposition aufweist, wobei
a) dem ersten Standort mindestens drei voneinander beabstandete erste Aufpunkte zugeordnet werden, deren Koordinaten im ersten Roboter-Koordinatensystem vorgegeben sind oder gemessen werden,
b) die Positionen der ersten Aufpunkte mittels des Koordinaten-Meßgerätes bezüglich des Welt-Koordinatensystems gemessen werden und aus den so erhaltenen Meßergebnissen die erste Relativorientierung bestimmt wird,
c) dem ersten Standort ein erster und dem zweiten Standort ein zweiter Spurpunkt zugeordnet wird, wobei die Lage, welche der erste Spurpunkt im ersten Roboter-Koordinatensystem einnimmt, identisch ist mit derjenigen Lage, welche der zweite Spurpunkt im zweiten Roboter-Koordinatensystem einnimmt,
d) die Koordinaten des ersten und des zweiten Spurpunktes jeweils mittels des Koordinaten-Meßgerätes bezüglich des Welt-Koordinatensystems gemessen werden,
e) die Orientierung der Verfahrachse im Welt-Koordinatensystem durch Vergleich der Koordinaten des ersten und des zweiten Spurpunktes im Welt-Koordinatensystem bestimmt wird, und
f) aus der so erhaltenen Orientierung der Verfahrachse im Welt-Koordinatensystem sowie der ersten Relativorientierung die relative Orientierung der Verfahrachse gegenüber dem ersten Roboter-Koordinatensystem bestimmt wird.

Gemäß einer Variante dieses Verfahrens wird folgendermaßen vorgegangen:

Die erste Relativorientierung wird aus den Koordinaten von mindestens drei ersten Aufpunkten sowohl bezogen auf das erste Roboter-Koordinatensystem als auch bezogen auf das Welt-Koordinatensystem auf die selbe Weise bestimmt, wie es oben unter Bezug auf die vorhergehende Variante, dortige Verfahrensschritte a) und b), erläutert wurde.

Nun wird gemäß Verfahrensschritt c) dem ersten Standort ein erster und dem zweiten Standort ein zweiter Spurpunkt zugeordnet, wobei die Lage des ersten Spurpunktes im ersten Roboter-Koordinatensystem mit der Lage des zweiten Spurpunktes im zweiten Roboter-Koordinatensystem übereinstimmt, d.h. der erste Spurpunkt geht in den zweiten Spurpunkt über, wenn der Roboter vom ersten an den zweiten Standort verfahren wird. Der erste Spurpunkt kann so gewählt werden, daß er mit einem der ersten Aufpunkte zusammenfällt, d.h. jeder der ersten Aufpunkte kann zugleich als erster Spurpunkt dienen.

Die Koordinaten des ersten und des zweiten Spurpunktes werden gemäß Verfahrensschritt d) jeweils mittels des Koordinaten-Meßgerätes bezüglich des Welt-Koordinatensystems gemessen. Die Orientierung der Verfahrachse im Welt-Koordinatensystem kann nun sehr einfach ermittelt werden, indem diese Koordinaten miteinander verglichen werden, Verfahrensschritt e), da die Verfahrachse im Mittel parallel zur Verbindungslinie der beiden Spurpunkte verläuft.

Nun kann die gesuchte relative Orientierung der Verfahrachse gegenüber dem ersten Roboter-Koordinatensystem aus der so erhaltenen Orientierung der Verfahrachse im Welt-Koordinatensystem sowie der ersten Relativorientierung berechnet werden, Verfahrensschritt f).

Die Betrachtung des zweiten Roboter-Koordinatensystems sowie die Berechnung der ersten und zweiten Relativposition sind demnach bei dieser Verfahrensvariante nicht zwingend erforderlich; auch eine Berechnung der Ursprünge des ersten bzw. zweiten Roboter-Koordinatensystems ist in der letztgenannten Variante nicht erforderlich.

Jedoch können der erste Spurpunkt mit dem Ursprung des ersten Roboter-Koordinatensystems und der zweite Spurpunkt mit dem Ursprung des zweiten Roboter-Koordinatensystems zusammenfallend gewählt werden. Gemäß einer anderen Variante werden die Spurpunkte möglichst nahe an der Achse der Roboter-Verfahrachse gewählt. Eine solche Wahl ist sehr vorteilhaft, da in diesem Fall eine Orientierungsabweichung der ersten gegenüber der zweiten Relativorientierung, die z.B. durch eine Verwindung der Roboter-Verfahrachse bedingt sein kann, von nur sehr geringem Einfluß ist.

Gemäß einer Variante der Erfindung wird die zweite Relativposition unter der Annahme bestimmt, daß die erste und die zweite Relativorientierung identisch sind. Diese Variante ist insbesondere dann zweckmäßig, wenn bereits festgestellt wurde oder von vornherein bekannt ist, daß das Roboter-Koordinatensystem beim Übergang vom ersten zum zweiten Standort seine Orientierung nur unwesentlich ändert, d.h. die erste und zweite Relativorientierung sich nur wenig voneinander unterscheiden. In diesem Fall kann darauf verzichtet werden, die zweite Relativorientierung zu ermitteln; die zweite Relativposition kann näherungsweise aus den Positionen des zweiten Aufpunktes im Roboter- und im Welt-Koordinatensystem sowie der ersten Relativorientierung bestimmt werden. In dieser Variante werden daher zwar drei erste Aufpunkte, aber nur ein zweiter Aufpunkt benötigt. Der durch diese Näherung verursachte Fehler bei der Bestimmung der relativen Orientierung der Roboter-Verfahrachse gegenüber dem Roboter-Koordinatensystem kann in vielen Fällen vernachlässigt werden.

Gemäß einer weiteren Variante sind die auf das zweite Roboter-Koordinatensystem bezogenen Koordinaten mindestens einer der zweiten Aufpunkte mit den auf das erste Roboter-Koordinatensystem bezogenen Koordinaten eines der ersten Aufpunkte identisch.

Vorzugsweise ist die Anzahl der ersten und der zweiten Aufpunkte jeweils gleich groß, wobei die auf das zweite Roboter-Koordinatensystem bezogenen Koordinaten jedes der zweiten Aufpunkte mit den auf das erste Roboter-Koordinatensystem bezogenen Koordinaten jeweils eines der ersten Aufpunkte identisch, d.h. die ersten Aufpunkte gehen in die zweiten Aufpunkte über, wenn der Roboter vom ersten an den zweiten Standort verfahren wird. Im letztgenannten Fall ist die Genauigkeit der Bestimmung der relativen winkelmäßigen Orientierung der Roboter-Verfahrachse gegenüber dem ersten Roboter-Koordinatensystem im wesentlichen nur durch die Wiederholgenauigkeit bei der erneuten Positionierung des Roboterarmes an denselben Zielpunkt im Roboter-Koordinatensystem begrenzt, so daß auf diese Weise eine besonders hohe Genauigkeit erreicht wird.

Für den Fall, daß das Verfahren nur für ein einziges Paar von Standorten ausgeführt werden soll, kann es vorteilhaft sein, den ersten Standort im Bereich des einen Endes der Verfahrachse und den zweiten Standort im Bereich ihres anderen Endes zu wählen. Auf diese Weise mit dem erfindungsgemäßen Verfahren über praktisch die gesamte Länge des Verfahrachse die mittlere Orientierung der Roboter-Verfahrachse gegenüber dem ersten Roboter-Koordinatensystem festgestellt, so daß sich lokale Abweichungen von dieser Orientierung nicht oder nur wenig auf das Ergebnis auswirken.

Selbstverständlich können die erfindungsgemäßen Verfahren jedoch für beliebige verschiedene Paare von Standorten entlang der Roboter-Verfahrachse wiederholt werden. Die Ergebnisse können dazu verwendet werden, eine gemittelte relative Orientierung der Roboter-Verfahrachse gegenüber dem ersten Roboter-Koordinatensystem zu ermitteln, wobei die Mittelung beispielsweise mit Hilfe einer linearen Regression durchgeführt wird. Die Ergebnisse können ferner dazu verwendet werden, die relative Orientierung der Roboter-Verfahrachse gegenüber dem ersten Roboter-Koordinatensystem abschnittsweise getrennt zu ermitteln. Besonders vorteilhaft ist es hierbei, das Verfahren zunächst für einen ersten und einen diesem relativ nahe gelegenen zweiten Standort durchzuführen, und anschließend das Verfahren erneut durchzuführen, wobei ein neuer zweiter Standort gewählt wird und der bisherige zweite Standort als neuer erster Standort gewählt wird, usw. Auf diese Weise kann die Orientierung der Verfahrachse abschnittsweise und lückenlos erfaßt werden.

Eine andere vorteilhafte Möglichkeit besteht darin, den ersten Standort fest beizubehalten und nacheinander verschiedene zweite Standorte entlang der Verfahrachse zu wählen. In diesem Fall brauchen die erste Relativorientierung und die erste Relativposition trotz der Mehrzahl der gewählten zweiten Standorte nur einmal ermittelt zu werden.

Ferner können die erfindungsgemäßen Verfahren für verschiedene Standorte entlang der Roboter-Verfahrachse wiederholt werden und die Ergebnisse dazu verwendet werden, die relative Orientierung der Roboter-Verfahrachse gegenüber dem ersten Roboter-Koordinatensystem als Funktion des Standortes zu ermitteln. Dies Variante ist insbesondere dann vorteilhaft, wenn die Roboter-Verfahrachse gekrümmt verläuft oder einen Knick aufweist. Die genannte Funktion kann z.B. abschnittsweise aus einzelnen linearen Funktionen zusammengesetzt sein oder eine auf eine Vielzahl von Standorten gestützte Fitfunktion sein.

Selbstverständlich kann der Roboter auch zunächst an den zweiten Standort verfahren werden und erst nach Ermittlung der zweiten Relativorientierung bzw. der zweiten Relativposition an den ersten Standort verfahren werden. Die Reihenfolge der Ermittlung der ersten Relativorientierung, der ersten Relativposition, der zweiten Relativorientierung und der zweiten Relativposition ist beliebig.

### Kurzbeschreibung der Zeichnung:

- Fig. 1: dient zur Erläuterung der Bestimmung der relativen Orientierung einer Roboter-Verfahrachse gegenüber einem ersten Roboter-Koordinatensystem, wobei gemäß einer Variante der Erfindung drei erste und drei zweite Aufpunkte benutzt werden,
- Fig. 2: dient zur Erläuterung der Bestimmung der relativen Orientierung der Roboter-Verfahrachse gegenüber dem ersten Roboter-Koordinatensystem gemäß einer anderen Variante der Erfindung, bei welcher die drei ersten und nur ein zweiter Aufpunkt benutzt werden,
- Fig. 3: dient zur Erläuterung der Bestimmung der relativen Orientierung der Roboter-Verfahrachse gegenüber dem ersten Roboter-Koordinatensystem gemäß einer weiteren Variante der Erfindung, bei welcher ein erster und ein zweiter Spurpunkt benutzt werden, und
- Fig. 4: dient als Beispiel für eine Anwendung eines erfindungsgemäßen Verfahrens auf fünf verschiedene Standorte entlang der Verfahrachse.

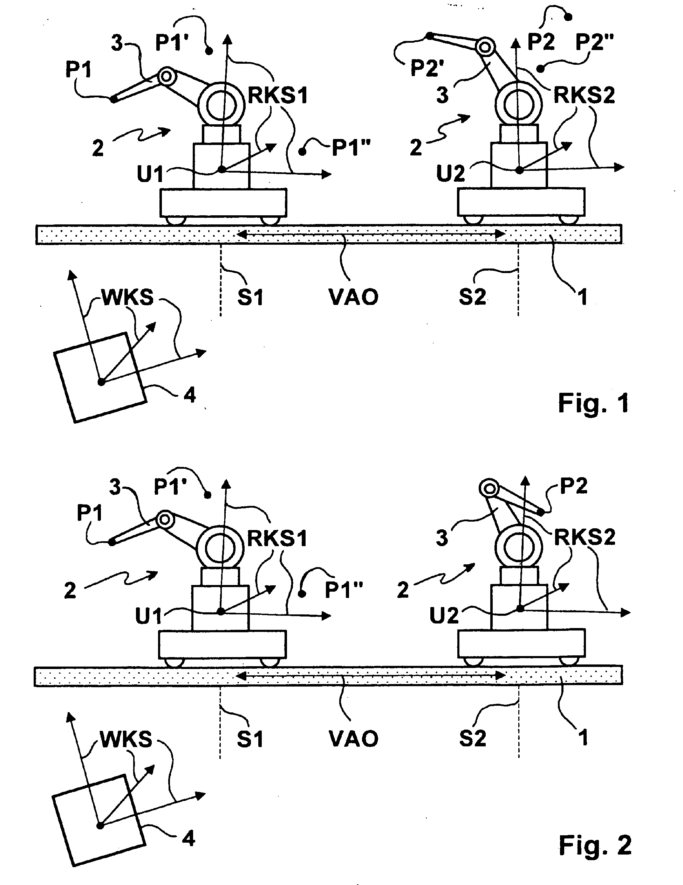

Fig. 1 dient zur Erläuterung der Bestimmung der relativen Orientierung einer Roboter-Verfahrachse 1 gegenüber einem ersten Roboter-Koordinatensystem RKS1, wobei gemäß einer Variante der Erfindung drei erste Aufpunkte P1,P1',P1" und drei zweite Aufpunkte P2,P2',P2" benutzt werden. In Fig. 1 ist schematisch ein Roboter 2 mit einem zweigliedrigen Arm 3 dargestellt, wobei der Roboter 2 entlang der Roboter-Verfahrachse 1 zwischen einem ersten Standort S1 und einem zweiten Standort S2 verfahrbar ist. Der Roboter 2 befinde sich zunächst am ersten Standort S1 und danach am zweiten Standort S2, wobei in Fig. 1 diese beiden Situationen aus Gründen der Verständlichkeit gleichzeitig dargestellt sind.

Auf den Roboter 2 ist ein Roboter-Koordinatensystem bezogen, welches mit dem Roboter 2 mitbewegt wird und in das erste Roboter-Koordinatensystem RKS1 übergeht, wenn sich der Roboter am ersten Standort S1 befindet.

Der Arm 3 des Roboter 2 ist dreidimensional verfahrbar, so daß der Arm 3 innerhalb eines bestimmten Aktionsradius beliebige Zielpunkte im Raum anfahren kann, ohne daß hierzu der Roboter 2 entlang der Verfahrachse 1 verfahren werden, d.h. seinen Standort verlassen muß. Der vom Roboterarm 3 angesteuerte Zielpunkt ist mit der Spitze des Arms 3 identisch.

Zunächst wird der Roboter an den ersten Standort S1 verfahren. Das Roboter-Koordinatensystem geht somit in das erste Roboter-Koordinatensystem RKS1 über. Dem ersten Standort S1 sind die drei ersten Aufpunkte P1,P1',P1" zugeordnet, welche nicht auf einer Geraden liegen und sich alle innerhalb der Reichweite des Arms 3 befindet, falls sich der Roboter 2 am ersten Standort S1 befindet. Die Koordinaten der drei ersten Aufpunkte P1,P1',P1" bezüglich des ersten Roboter-Koordinatensystems RKS1 werden willkürlich vorgegeben und in einem nicht gezeigten Speicher oder Rechner gespeichert.

Außerhalb des Roboters 2 befindet sich ein ortsfestes Koordinaten-Meßgerät 4. Die Spitze des Roboterarmes 3 ist mit einer (nicht gezeigten) Markierung versehen, welche durch das Koordinaten-Meßgerät 4 erfaßbar ist, wobei die Position der Markierung der Position des vom Arm 3 angesteuerten Zielpunktes entspricht. Die Markierung kann z.B. eine sich vom Hintergrund farblich abhebende kleine Kugel oder eine Leuchtdiode sein. Auf das Koordinaten-Meßgerät 4 ist ein stationäres Welt-Koordinatensystem WKS bezogen. Gegenüber diesem weist das erste Roboter-Koordinatensystem RKS1 winkelmäßig eine erste Relativorientierung und lateral eine erste Relativposition auf. Das zweite Roboter-Koordinatensystem RKS2 weist gegenüber dem Welt-Koordinatensystem WKS winkelmäßig eine zweite Relativorientierung und lateral eine zweite Relativposition auf.

Das Koordinaten-Meßgerät 4 ist imstande, die Position der Markierung zu erfassen und deren auf das Welt-Koordinatensystem WKS bezogene Koordinaten auszugeben oder zu speichern.

Nun erhält der Roboter 2 den Befehl, mit seinem Arm 3 nacheinander die vorgegebenen drei ersten Aufpunkte P1,P1',P1" anzusteuern; in Fig. 1 ist links die Situation dargestellt, in welcher der Arm 3 gerade den Aufpunkt P1 erreicht. Nach Erreichen jedes der ersten Aufpunkte P1,P1',P1" werden dessen auf das Welt-Koordinatensystem WKS bezogene Koordinaten mittels des Koordinaten-Meßgerätes 4 ermittelt und gespeichert.

Es ist nicht zwingend erforderlich, die Koordinaten der ersten Aufpunkte P1,P1',P1" bezüglich des ersten Roboter-Koordinatensystems RKS1 vorzugeben; vielmehr kann der Roboterarm 3 dreimal nacheinander jeweils an irgendeinen Aufpunkt gesteuert werden, wobei der Roboter 2 bei Erreichen des Aufpunktes jeweils dessen Koordinaten bezüglich des ersten Roboter-Koordinatensystems RKS1 ausliest und speichert oder zur Speicherung ausgibt, sofern diese Koordinaten nicht von vornherein vorgegeben und daher ohnehin bekannt sind.

Somit sind nun die Koordinaten der drei ersten Aufpunkte P1,P1',P1" sowohl im ersten Roboter-Koordinatensystem RKS1 als auch im Welt-Koordinatensystem WKS bekannt. Daher kann nun die winkelmäßige Orientierung des ersten Roboter-Koordinatensystems RKS1 gegenüber dem Welt-Koordinatensystem WKS, das ist die erste Relativorientierung, rechnerisch bestimmt werden. Ferner kann anhand der in der oben erläuterten Weise gewonnenen Meßergebnisse die Lage des Ursprungs U1 des ersten Roboter-Koordinatensystems RKS1 auf das Welt-Koordinatensystem WKS umgerechnet so die erste Relativposition bestimmt werden. Damit sind die winkelmäßige Orientierung und die laterale Lage des ersten Roboter-Koordinatensystems RKS1 bezüglich des Welt-Koordinatensystems WKS bekannt.

Anschließend wird der Roboter 2 an den zweiten Standort S2 verfahren, so daß das Roboter-Koordinatensystem in das zweite Roboter-Koordinatensystem RKS2 übergeht. Dem zweiten Standort S2 sind drei zweite Aufpunkte P2,P2',P2" zugeordnet, welche nicht auf einer Geraden liegen und sich alle innerhalb der Reichweite des Arms 3 befinden, falls sich der Roboter 2 am zweiten Standort S2 befindet. Die Koordinaten der drei zweiten Aufpunkte P2,P2',P2" bezüglich des zweiten Roboter-Koordinatensystems RKS2 werden wiederum willkürlich vorgegeben und in einem nicht gezeigten Speicher oder Rechner gespeichert.

Der Roboter 2 erhält Befehl, mit seinem Arm 3 nacheinander die vorgegebenen drei zweiten Aufpunkte P2,P2',P2" anzusteuern; in Fig. 1 ist rechts die Situation dargestellt, in welcher der Arm 3 gerade den Aufpunkt P2' erreicht. Nach Erreichen jedes der zweiten Aufpunkte P2,P2',P2" werden dessen auf das Welt-Koordinatensystem WKS bezogene Koordinaten mittels des Koordinaten-Meßgerätes 4 ermittelt und gespeichert.

Auch die Koordinaten der zweiten Aufpunkte P2,P2',P2" bezüglich des ersten Roboter-Koordinatensystems RKS2 müssen nicht notwendigerweise vorgegeben sein; vielmehr kann der Roboterarm 3 auch vom zweiten Standort S2 aus dreimal nacheinander jeweils irgendeinen Aufpunkt ansteuern, wobei der Roboter 2 bei Erreichen des Aufpunktes jeweils dessen Koordinaten bezüglich des zweiten Roboter-Koordinatensystems RKS2 ausliest und speichert, sofern diese nicht von vornherein vorgegeben und daher ohnehin bekannt waren.

Somit sind nun auch die Koordinaten der drei zweiten Aufpunkte P2,P2',P2" sowohl im ersten Roboter-Koordinatensystem RKS1 als auch im Welt-Koordinatensystem WKS bekannt, so daß nun die Lage des Ursprungs U2 des zweiten Roboter-Koordinatensystems RKS2 auf das Welt-Koordinatensystem WKS umgerechnet so die zweite Relativposition bestimmt werden.

Da nun die Lage der Ursprünge U1,U2 jeweils im Welt-Koordinatensystem WKS bekannt ist, kann nun sehr leicht die in Fig. 1 durch einen Doppelpfeil VAO markierte winkelmäßige Orientierung der Verfahrachse 1 gegenüber dem WeltKoordinatensystem WKS bestimmt werden, da die Verfahrachse im Mittel parallel zur Verbindungslinie der beiden Ursprünge U1,U2 verläuft. Aus der so erhaltenen Orientierung VAO der Verfahrachse 1 im Welt-Koordinatensystem WKS und aus der ersten Relativorientierung wird nun die relative winkelmäßige Orientierung der Verfahrachse 1 gegenüber dem ersten Roboter-Koordinatensystem errechnet.

Besonders vorteilhaft bei dieser Variante ist, daß keine Annahmen bezüglich der Verwindungsfreiheit und des linearen Verlaufes der Verfahrachse 1 gemacht werden müssen, da die Orientierung des zweiten Roboter-Koordinatensystems RKS2 erfaßt wird und in die Berechnungen eingeht. Dieser Vorteil ist z.B. dann von Bedeutung, wenn sich die Verfahrachse 1 unter dem Gewicht des Roboter 2 verschiebt, verbiegt oder verwindet. Diese Einflüsse werden durch das erfindungsgemäße Verfahren vorteilhafterweise automatisch berücksichtigt und wirken sich daher nicht mehr störend aus.

Vorzugsweise sind auf dem ersten und dem zweiten Standort S1,S2 jeweils die gleiche Anzahl von Aufpunkten P1P1',P1" bzw. P2,P2',P2" zugeordnet und die auf das zweite Roboter-Koordinatensystem RKS2 bezogenen Koordinaten jedes der zweiten Aufpunkte P2,P2',P2" mit den auf das erste Roboter-Koordinatensystem RKS1 bezogenen Koordinaten jeweils eines der ersten Aufpunkte P1,P1',P1" identisch, d.h. jeder der ersten Aufpunkte gehen in genau einen der zweiten Aufpunkte über oder umgekehrt, wenn der Roboter 2 vom ersten an den zweiten Standort verfahren wird oder umgekehrt. In diesem Fall ist die Genauigkeit der Bestimmung der relativen winkelmäßigen Orientierung der Roboter-Verfahrachse 1 gegenüber dem ersten Roboter-Koordinatensystem RKS1 im wesentlichen nur durch die Wiederholgenauigkeit bei der erneuten Positionierung des Roboterarmes 3 an denselben Zielpunkt im Roboter-Koordinatensystem begrenzt, so daß auf diese Weise eine besonders hohe Genauigkeit erreicht wird.

Es ist nicht zwingend erforderlich, die Lage des Ursprungs U1 im Welt-Koordinatensystem WKS und damit die erste Relativposition mit Hilfe der ersten Aufpunkte P1,P1',P1" zu bestimmen. Vielmehr kann zur Bestimmung der ersten Relativposition auf die Verwendung der ersten Aufpunkte verzichtet werden, indem ein dritter Aufpunkt ebenfalls dem ersten Standort S1 zugeordnet wird, dessen Koordinaten im ersten Roboter-Koordinatensystem RKS1 vorgegeben sind oder gemessen werden. In diesem Fall wird zur Bestimmung der Lage des Ursprungs U1 der Arm 3 des Roboters 2 an den dritten Aufpunkt gesteuert und dessen Lage im Welt-Koordinatensystem mit dem Koordinaten-Meßgerät 4 gemessen. Mittels dieser Meßergebnisse wird nun die Lage des Ursprungs U1 im Welt-Koordinatensystem WKS rechnerisch festgestellt. Selbstverständlich kann grundsätzlich der Ursprung U1 unmittelbar selbst als dritter Aufpunkt gewählt werden. In der Praxis ist dies jedoch oft nicht möglich, da der Ursprung U1 in der Regel im Inneren des Roboters 2 liegt und daher vom Arm 3 nicht angesteuert werden kann.

Fig. 2 dient zur Erläuterung der Bestimmung der relativen Orientierung der Roboter-Verfahrachse 1 gegenüber dem ersten Roboter-Koordinatensystem RKS1 gemäß einer anderen Variante der Erfindung, bei welcher wiederum die drei ersten Aufpunkte P1,P1',P1", jedoch nur ein zweiter Aufpunkt P2 benutzt werden. Der Roboter 2 befinde sich wiederum zunächst am ersten Standort S1 und danach am zweiten Standort S2, wobei auch in Fig. 2 diese beiden Situationen aus Gründen der Verständlichkeit gleichzeitig dargestellt sind.

Die Vorgehensweise zur Ermittlung der ersten Relativorientierung sowie der ersten Relativposition ist bei dieser Variante identisch mit der Vorgehensweise, welche oben unter Bezug auf Fig. 1 erläutert wurde. Der linke Teil von Fig. 2 ist daher identisch mit dem linken Teil von Fig. 1.

Zur Bestimmung der zweiten Relativposition wird bei der Variante unter Bezug auf Fig. 2 erläuterten Variante nur ein zweiter Aufpunkt P2 ausgewählt, welcher dem zweiten Standort zugeordnet wird und dessen Koordinaten im zweiten Roboter-Koordinatensystem vorgegeben sind oder gemessen werden. In Fig. 2 ist rechts die Situation dargestellt, in welcher der Arm 3 gerade den zweiten Aufpunkt P2 erreicht hat.

Die Koordinaten des zweiten Aufpunktes P2 werden wiederum mittels des Koordinaten-Meßgerätes 4 auch bezüglich des Welt-Koordinatensystems gemessen.

Mit Hilfe der so erhaltenen Meßergebnisse wird die Lage des Ursprungs U2 im Welt-Koordinatensystem WKS und damit die zweite Relativposition unter der Annahme bestimmt, daß die erste und die zweite Relativorientierung miteinander identisch sind, d.h., daß die Orientierung des Roboter-Koordinatensystems beim Übergang vom ersten zum zweiten Standort sich nicht ändert. Diese Annahme kann selbstverständlich nur näherungsweise richtig sein; jedoch kann der auf diese Weise in Kauf genommene Fehler vernachlässigbar sein, wenn die Verfahrachse im wesentlichen verwindungsfrei ist und geradlinig verläuft. Das erste und das zweite Roboter-Koordinatensystem sind in diesem Fall im wesentlichen nicht gegeneinander verdreht, sondern lediglich gegeneinander lateral verschoben.

Da nun die Lage der Ursprünge U1,U2 jeweils im Welt-Koordinatensystem WKS bekannt ist, kann nun wiederum, wie bereits oben unter Bezug auf Fig. 1 erläutert wurde, die winkelmäßige Orientierung VAO der Verfahrachse 1 gegenüber dem Welt-Koordinatensystem WKS hieraus die gesuchte relative winkelmäßige Orientierung der Verfahrachse 1 gegenüber dem ersten Roboter-Koordinatensystem RKS 1 bestimmt werden.

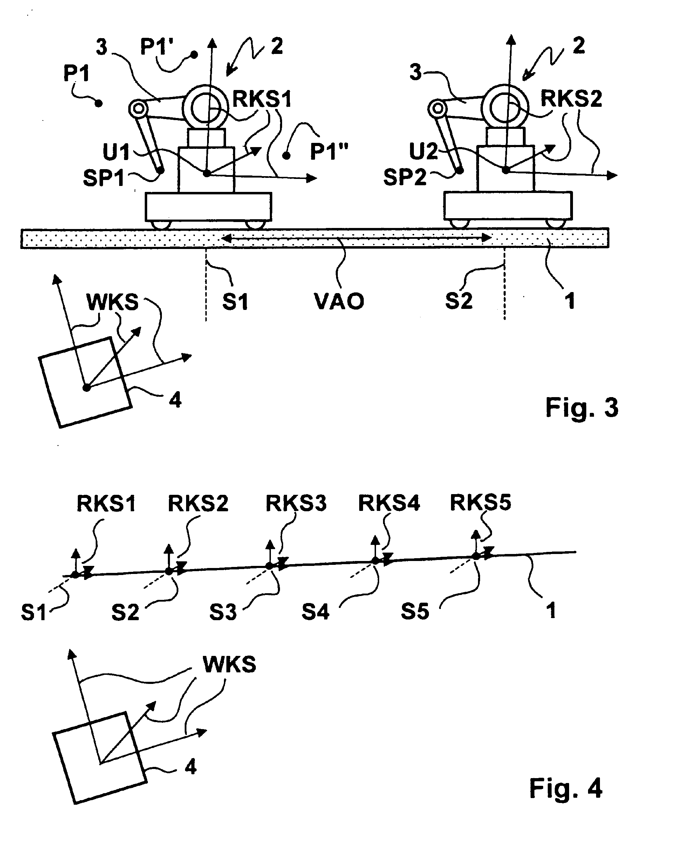

Fig. 3 dient zur Erläuterung der Bestimmung der relativen Orientierung der Roboter-Verfahrachse 1 gegenüber dem ersten Roboter-Koordinatensystem RKS1 gemäß einer weiteren Variante der Erfindung, bei welcher ein erster Spurpunkt SP1 und ein zweiter Spurpunkt SP2 benutzt werden.

Die Vorgehensweise zur Ermittlung der ersten Relativorientierung anhand der ersten Aufpunkte P1,P1',P1" ist bei dieser Variante wiederum identisch mit der Vorgehensweise, welche oben unter Bezug auf Fig. 1 erläutert wurde.

Neben den ersten Aufpunkten P1,P1',P1" wird dem ersten Standort S1 ferner ein erster Spurpunkt SP1 zugeordnet. Dessen Koordinaten brauchen im ersten Roboter-Koordinatensystem RKS1 nicht notwendigerweise bekannt zu sein oder ausgelesen zu werden. Die Lage des ersten Spurpunktes SP1 im Welt-Koordinatensystem wird mit dem Koordinaten-Meßgerät 4 gemessen. Dies kann insbesondere dadurch geschehen, daß der Roboterarm 3, während sich der Roboter 2 am ersten Standort S1 befindet, den ersten Spurpunkt SP1 ansteuert, wie es in Fig. 3 links schematisch dargestellt ist, und das Koordinaten-Meßgerät 4 die Koordinaten einer an der Spitze des Arms 3 angeordneten Markierung (nicht gezeigt) erfaßt.

Nun wird dem zweiten Standort S2 ein zweiter Spurpunkt SP2 zugeordnet, welcher im zweiten Roboter-Koordinatensystem RKS2 die gleichen Koordinaten aufweist, also die gleiche Lage einnimmt wie der erste Spurpunkt SP1 im ersten Roboter-Koordinatensystem RKS1. D.h., bei Übergang des Roboters 2 vom ersten an den zweiten Standort geht der erste Spurpunkt SP1 über in den zweiten Spurpunkt SP2, und umgekehrt. Dies kann insbesondere dadurch erreicht werden, daß der Roboter 2 an den zweiten Standort S2 verfahren wird, wobei die Stellung des Arms 3 gegenüber dem Roboter 2 unverändert bleibt, wie es in Fig. 3 rechts schematisch dargestellt ist. Nun werden die Koordinaten der an der Spitze des Arms 3 angeordneten (nicht gezeigten) Markierung und damit die Lage des zweiten Spurpunktes SP2 im Welt-Koordinatensystem WKS mit dem Koordinaten-Meßgerät 4 erfaßt.

Unter der Voraussetzung einer verwindungsfreien Verfahrachse 1 bewegt sich jeder im Roboter-Koordinatensystem stationäre Punkt bei Verschiebung des Roboters 2 entlang der Verfahrachse 1 entlang einer Spur, welche zum Verlauf der Verfahrachse 1 parallelverschoben ist.

Die Verbindungsgerade der beiden Spurpunkte SP1,SP2 verläuft daher parallel zur mittleren Richtung der Verfahrachse 1 und weist daher im Welt-Koordinatensystem WKS dieselbe Orientierung VOA auf wie die Verfahrachse 1.

Die Orientierung VAO der Verfahrachse 1 im Welt-Koordinatensystem WKS kann nun sehr einfach ermittelt werden, indem die so ermittelten, auf das Welt-Koordinatensystem bezogenen Koordinaten der Spurpunkte SP1,SP2 miteinander verglichen werden. Nun kann die gesuchte relative Orientierung der Verfahrachse 1 gegenüber dem ersten Roboter-Koordinatensystem RKS1 aus der so erhaltenen Orientierung VAO der Verfahrachse 1 im Welt-Koordinatensystem WKS sowie der ersten Relativorientierung berechnet werden.

Für diese Verfahrensvariante brauchen demnach die erste Relativposition, die zweite Relativposition, die zweite Relativorientierung sowie die Lage der Ursprünge U1, U2 im Welt-Koordinatensystem WKS nicht notwendigerweise bekannt zu sein bzw. bestimmt zu werden.

Selbstverständlich kann grundsätzlich der Ursprung U1 unmittelbar selbst als erster Spurpunkt SP1 gewählt werden, so daß der zweite Spurpunkt SP2 mit dem Ursprung U2 zusammenfällt. In der Praxis ist dies jedoch oft nicht möglich, da der Ursprung U1 in der Regel im Inneren des Roboters 2 liegt und daher vom Arm 3 nicht angesteuert werden kann.

Gemäß einer bevorzugten Variante werden die Spurpunkte SP1,SP2 möglichst nahe an der Achse der Roboter-Verfahrachse 1 gewählt, da in diesem Fall der störende Einfluß einer Verwindung derselben von nur geringem Einfluß ist.

Sämtliche Varianten der erfindungsgemäßen Verfahren können selbstverständlich für verschiedene Paare von Standorten entlang der Roboter-Verfahrachse 1 wiederholt werden. Auf diese Weise kann z.B. eine gemittelte relative Orientierung der Roboter-Verfahrachse 1 gegenüber dem ersten Roboter-Koordinatensystem RKS1 ermittelt werden ferner kann auf diese Weise z.B. die relative Orientierung der Roboter-Verfahrachse 1 gegenüber dem ersten Roboter-Koordinatensystem RKS1 als Funktion des Standortes entlang der Verfahrachse 1 ermittelt werden.

Fig. 4 zeigt als Beispiel hierfür fünf Standorte S1, S2, S3, S4, S5 entlang der Roboter-Verfahrachse 1, für welche jeweils die Orientierung der zugehörigen Roboter-Koordinatensysteme RKS1, RKS2, RKS3, RKS4 und RKS5 gegenüber der Verfahrachse 1 erfindungsgemäß bestimmt wurde.

Zur Bestimmung der Koordinatensysteme unter Berücksichtigung der Gewichtseinflüsse des Roboters wird auf der Verfahrachse 1 nacheinander eine Anzahl n von Standorten angefahren; im Beispiel von Fig. 4 ist n=5.

An jeder dieser Standorte wird gemäß einer vorteilhaften Variante mit dem Roboterarm 3 eine Anzahl von p Aufpunkten im kartesischen Raum angefahren, wobei p≥3 gilt und bei dieser p-Punkt-Messung die Basis des Roboters 1, der Roboterfuß, auf der Verfahrachse 1 nicht bewegt wird. Jeder dieser p Aufpunkte ist im Koordinatensystem des Roboters 2 bekannt. Mit dem Koordinaten-Messgerät 4 zur Bestimmung von Koordinaten im 3D-Raum (z. B. Lasertracker LTD 500 der Fa. Leica) werden diese vom Roboterarm 3 angesteuerten Aufpunkte im Weltkoordinatensystem WKS vermessen und so die Lage zu dem Standort gehörenden Roboter-Koordinatensystems relativ zu diesem Welt-Koordinatensystem WKS rechnerisch bestimmt.

Nach Vermessung der p Aufpunkte an einem Standort und der Bestimmung des jeweils zu dem Standort gehörigen Roboter-Koordinatensystems wird der Roboter 2 entlang der Verfahrachse 1 an den nächsten Standort verfahren; anschließend werden wieder dieselben p Aufpunkte, bezogen auf das mit dem Roboter 2 mitbewegte, zu diesem Standort gehörende Roboter-Koordinatensystem, angesteuert, vermessen und das zu diesem Standort gehörende Roboter-Koordinatensystem bestimmt.

Dieser Vorgang kann so oft wiederholt werden, bis der Roboter 2 am Ende der Linearachse ankommt und alle n Standorte angefahren wurden.

Auf Grund der Tatsache, dass an jedem Standort entlang Verfahrachse 1 stets die selben p Aufpunkte bezüglich jeweils zu dem Standort gehörenden des Roboter-Koordinatensystems angesteuert werden, also an jedem Standort dieselben Armkonfigurationen des Roboters 2 eingestellt werden, tritt als Fehler bei der Bestimmung der Roboter-Koordinatensysteme im wesentlichen nur die Wiederholgenauigkeit des Roboterarmes 3 in Erscheinung.

Auf diese Weise kann die durchschnittliche Achsrichtung der Verfahrachse z.B. im ersten Roboter-Koordinatensystem RKS1 bestimmt werden. Hierzu werden die übrigen ermittelten (n-1) Roboter-Koordinatensysteme durch Koordinatentransformation im ersten Roboter-Koordinatensystem RKS1 ausgedrückt, d.h. auf dieses umgerechnet. Nun lässt sich aus der Lage der Ursprüngen der Roboter-Koordinatensysteme, bezogen auf das erste Roboter-Koordinatensystem RKS1, rechnerisch der durchschnittliche Richtungsvektor der Verfahrachse 1 im ersten Roboter-Koordinatensystem RKS1 ausdrücken die Bestimmung der Orientierung der Verfahrachse anhand der Lage der Ursprünge der Roboter-Koordinatensysteme ist vorteilhaft, da in diesem Fall die Orientierungsfehler, die der Roboter 2 durch Bewegung entlang der Verfahrachse 1 erfährt, wegfallen.

### Gewerbliche Anwendbarkeit:

Die Erfindung ist gewerblich anwendbar insbesondere im Bereich der Industrieautomation, z.B. in der mechanischen und in der elektronischen Fertigungstechnik, im Maschinenbau und im Fahrzeugbau.

### Liste der Bezugszeichen:

- 1: Roboter-Verfahrachse
- 2: Roboter
- 3: Arm von 2
- 4: Koordinaten-Meßgerät
- P1,P1',P1": erste Aufpunkte
- P2,P2',P2": zweite Aufpunkte
- RKS1: erstes Roboter-Koordinatensystem
- RKS2: erstes Roboter-Koordinatensystem
- S1, S2: erster, zweiter Standort
- U1: Ursprung von RKS1
- U2: Ursprung von RKS2
- VAO: Orientierung von 1 bezüglich WKS
- WKS: Welt-Koordinatensystem

## Patentansprüche

1. Verfahren zur Bestimmung der relativen winkelmäßigen Orientierung einer Roboter-Verfahrachse (1) gegenüber einem ersten Roboter-Koordinatensystem (RKS1), welches auf einen zwischen zwei voneinander beabstandeten Standorten (S1,S2) entlang der Roboter-Verfahrachse (1) translatorisch verfahrbaren Roboter (2) dann bezogen ist, wenn dieser sich an einem ersten Standort (S1) befindet, und welches in ein zweites Roboter-Koordinatensystem (RKS2) übergeht, wenn sich der Roboter (2) am zweiten Standort (S2) befindet, **dadurch gekennzeichnet, daß** auf ein außerhalb des Roboters (2) angeordnetes Koordinaten-Meßgerät (4) ein vom Roboter (2) unabhängiges, ortsfestes Welt-Koordinatensystem (WKS) bezogen ist, gegenüber welchem das erste bzw. zweite Roboter-Koordinatensystem (RKS1,RKS2) winkelmäßig eine erste bzw. zweite Relativorientierung und lateral eine erste bzw. zweite Relativposition aufweist, wobei
a) dem ersten Standort (S1) mindestens drei voneinander beabstandete erste Aufpunkte (P1,P1',P1") zugeordnet werden, deren Koordinaten im ersten Roboter-Koordinatensystem (RKS1) vorgegeben sind oder gemessen werden,
b) die Positionen der ersten Aufpunkte (P1,P1',P1") mittels des Koordinaten-Meßgerätes (4) bezüglich des Welt-Koordinatensystems (WKS) gemessen werden und aus den so erhaltenen Meßergebnissen die erste Relativorientierung und die erste Relativposition bestimmt werden,
c) dem zweiten Standort (S2) mindestens ein zweiter Aufpunkt (P2) zugeordnet wird, dessen Koordinaten in dem zweiten Roboter-Koordinatensystem (RKS2) vorgegeben sind oder gemessen werden,
d) die Position des zweiten Aufpunktes (P2) bzw. der zweiten Aufpunkte mittels des Koordinaten-Meßgerätes (4) bezüglich des Welt-Koordinatensystems (WKS) gemessen wird und mit Hilfe der so erhaltenen Meßergebnisse die zweite Relativposition unter der Annahme bestimmt wird, daß die erste und die zweite Relativorientierung miteinander identisch sind,
e) die Orientierung (VAO) der Verfahrachse (1) im Welt-Koordinatensystem (WKS) aus dem Vergleich ersten und der zweiten Relativposition bestimmt wird, und
f) aus der so erhaltenen Orientierung (VAO) der Verfahrachse (1) im Welt-Koordinatensystem (WKS) sowie der ersten Relativorientierung die relative Orientierung der Verfahrachse (1) gegenüber dem ersten Roboter-Koordinatensystem (RKS1) bestimmt wird.

2. Verfahren zur Bestimmung der relativen winkelmäßigen Orientierung einer Roboter-Verfahrachse (1) gegenüber einem ersten Roboter-Koordinatensystem (RKS1), welches auf einen zwischen zwei voneinander beabstandeten Standorten (S1,S2) entlang der Roboter-Verfahrachse (1) translatorisch verfahrbaren Roboter (2) dann bezogen ist, wenn dieser sich an einem ersten Standort (S1) befindet, und welches in ein zweites Roboter-Koordinatensystem (RKS2) übergeht, wenn sich der Roboter (2) am zweiten Standort (S2) befindet, **dadurch gekennzeichnet, daß** auf ein außerhalb des Roboters (2) angeordnetes Koordinaten-Meßgerät (4) ein vom Roboter (2) unabhängiges, ortsfestes Welt-Koordinatensystem (WKS) bezogen ist, gegenüber welchem das erste bzw. zweite Roboter-Koordinatensystem (RKS1,RKS2) winkelmäßig eine erste bzw. zweite Relativorientierung und lateral eine erste bzw. zweite Relativposition aufweist, wobei
a) dem ersten Standort (S1) mindestens drei voneinander beabstandete erste Aufpunkte (P1,P1',P1") zugeordnet werden, deren Koordinaten im ersten Roboter-Koordinatensystem (RKS1) vorgegeben sind oder gemessen werden,
b) die Positionen der ersten Aufpunkte (P1,P1',P1") mittels des Koordinaten-Meßgerätes (4) bezüglich des Welt-Koordinatensystems (WKS) gemessen werden und aus den so erhaltenen Meßergebnissen die erste Relativorientierung und die erste Relativposition bestimmt werden,
c) dem zweiten Standort (S2) mindestens drei zweite Aufpunkte (P2,P2',P2") zugeordnet werden, deren Koordinaten in dem zweiten Roboter-Koordinatensystem (RKS2) vorgegeben sind oder gemessen werden,
d) die Positionen der zweiten Aufpunkte (P2,P2',P2") mittels des Koordinaten-Meßgerätes (4) bezüglich des Welt-Koordinatensystems (WKS) gemessen werden, wobei aus den so erhaltenen Meßergebnissen die zweite Relativorientierung und die zweite Relativposition bestimmt werden,
e) die Orientierung (VAO) der Verfahrachse (1) im Welt-Koordinatensystem (WKS) aus dem Vergleich ersten und der zweiten Relativposition bestimmt wird, und
f) aus der so erhaltenen Orientierung (VAO) der Verfahrachse (1) im Welt-Koordinatensystem (WKS) sowie der ersten Relativorientierung die relative Orientierung der Verfahrachse (1) gegenüber dem ersten Roboter-Koordinatensystem (RKS1) bestimmt wird.

3. Verfahren zur Bestimmung der relativen winkelmäßigen Orientierung einer Roboter-Verfahrachse (1) gegenüber einem ersten Roboter-Koordinatensystem (RKS1), welches auf einen zwischen zwei voneinander beabstandeten Standorten (S1,S2) entlang der Roboter-Verfahrachse (1) translatorisch verfahrbaren Roboter (2) dann bezogen ist, wenn dieser sich an einem ersten Standort (S1) befindet, und welches in ein zweites Roboter-Koordinatensystem (RKS2) übergeht, wenn sich der Roboter (2) am zweiten Standort (S2) befindet, **dadurch gekennzeichnet, daß** auf ein außerhalb des Roboters (2) angeordnetes Koordinaten-Meßgerät (4) ein vom Roboter (2) unabhängiges, ortsfestes Welt-Koordinatensystem (WKS) bezogen ist, gegenüber welchem das erste bzw. zweite Roboter-Koordinatensystem (RKS1, RKS2) winkelmäßig eine erste bzw. zweite Relativorientierung und lateral eine erste bzw. zweite Relativposition aufweist, wobei
a) dem ersten Standort (S1) mindestens drei voneinander beabstandete erste Aufpunkte (P1,P1',P1") zugeordnet werden, deren Koordinaten im ersten Roboter-Koordinatensystem (RKS1) vorgegeben sind oder gemessen werden,
b) die Positionen der ersten Aufpunkte (P1,P1',P1") mittels des Koordinaten-Meßgerätes (4) bezüglich des Welt-Koordinatensystems (WKS) gemessen werden und aus den so erhaltenen Meßergebnissen die erste Relativorientierung bestimmt wird,
c) dem ersten Standort ein erster und dem zweiten Standort ein zweiter Spurpunkt (SP1,SP2) zugeordnet wird, wobei die Lage, welche der erste Spurpunkt (SP1) im ersten Roboter-Koordinatensystem (RKS1) einnimmt, identisch ist mit derjenigen Lage, welche der zweite Spurpunkt (SP2) im zweiten Roboter-Koordinatensystem (RKS2) einnimmt,
d) die Koordinaten des ersten und des zweite Spurpunktes jeweils mittels des Koordinaten-Meßgerätes (4) bezüglich des Welt-Koordinatensystems (WKS) gemessen werden,
e) die Orientierung (VAO) der Verfahrachse (1) im Welt-Koordinatensystem (WKS) durch Vergleich der Koordinaten des ersten und des zweiten Spurpunktes (SP1, SP2) im Welt-Koordinatensystem (WKS) bestimmt wird, und
f) aus der so erhaltenen Orientierung (VAO) der Verfahrachse (1) im Welt-Koordinatensystem (WKS) sowie der ersten Relativorientierung die relative Orientierung der Verfahrachse (1) gegenüber dem ersten Roboter-Koordinatensystem (RKS1) bestimmt wird.

4. Verfahren nach Anspruch 3, **dadurch gekennzeichnet,**
**daß** der erste Spurpunkt mit dem Ursprung (U1) des ersten Roboter-Koordinatensystems (RKS1) und der zweite Spurpunkt mit dem Ursprung (U2) des zweiten Roboter-Koordinatensystems (RKS2) zusammenfallen.

5. Verfahren zur Bestimmung der relativen winkelmäßigen Orientierung einer Roboter-Verfahrachse (1) gegenüber einem ersten Roboter-Koordinatensystem (RKS1), welches auf einen zwischen zwei voneinander beabstandeten Standorten (S1,S2) entlang der Roboter-Verfahrachse (1) translatorisch verfahrbaren Roboter (2) dann bezogen ist, wenn dieser sich an einem ersten Standort (S1) befindet, und welches in ein zweites Roboter-Koordinatensystem (RKS2) übergeht, wenn sich der Roboter (2) am zweiten Standort (S2) befindet, **dadurch gekennzeichnet, daß** auf ein außerhalb des Roboters (2) angeordnetes Koordinaten-Meßgerät (4) ein vom Roboter (2) unabhängiges, ortsfestes Welt-Koordinatensystem (WKS) bezogen ist, gegenüber welchem das erste bzw. zweite Roboter-Koordinatensystem (RKS1,RKS2) winkelmäßig eine erste bzw. zweite Relativorientierung und lateral eine erste bzw. zweite Relativposition aufweist, wobei
a) dem ersten Standort (S1) mindestens drei voneinander beabstandete erste Aufpunkte (P1,P1',P1") zugeordnet werden, deren Koordinaten im ersten Roboter-Koordinatensystem (RKS1) vorgegeben sind oder gemessen werden, und dem ersten Standort (S1) ferner mindestens ein dritter Aufpunkt zugeordnet wird, dessen bzw. deren Koordinaten im ersten Roboter-Koordinatensystem (RKS1) vorgegeben sind oder gemessen werden,
b) die Positionen der ersten Aufpunkte (P1,P1',P1") mittels des Koordinaten-Meßgerätes (4) bezüglich des Welt-Koordinatensystems (WKS) gemessen werden und aus den so erhaltenen Meßergebnissen die erste Relativorientierung bestimmt wird, und die Position des dritten Aufpunktes bzw. der dritten Aufpunkte mittels des Koordinaten-Meßgerätes (4) bezüglich des Welt-Koordinatensystems (WKS) gemessen wird und die erste Relativposition mit Hilfe der Position des dritten Aufpunktes bzw. der Positionen der dritten Aufpunkte bezüglich des Welt-Koordinatensystems (WKS) bestimmt wird,
c) dem zweiten Standort (S2) mindestens ein zweiter Aufpunkt (P2) zugeordnet wird, dessen Koordinaten in dem zweiten Roboter-Koordinatensystem (RKS2) vorgegeben sind oder gemessen werden,
d) die Position des zweiten Aufpunktes (P2) bzw. der zweiten Aufpunkte mittels des Koordinaten-Meßgerätes (4) bezüglich des Weit-Koordinatensystems (WKS) gemessen wird und mit Hilfe der so erhaltenen Meßergebnisse die zweite Relativposition bestimmt wird,
e) die Orientierung (VAO) der Verfahrachse (1) im Welt-Koordinatensystem (WKS) aus dem Vergleich ersten und der zweiten Relativposition bestimmt wird, und
f) aus der so erhaltenen Orientierung (VAO) der Verfahrachse (1) im Welt-Koordinatensystem (WKS) sowie der ersten Relativorientierung die relative Orientierung der Verfahrachse (1) gegenüber dem ersten Roboter-Koordinatensystem (RKS1) bestimmt wird.

6. Verfahren nach Anspruch 5, **dadurch gekennzeichnet,**
**daß** mindestens einer der dritten Aufpunkte mit mindestens einem der ersten Aufpunkte identisch ist.

7. Verfahren nach Anspruch 1 oder 2, **dadurch gekennzeichnet,**
**daß** die auf das zweite Roboter-Koordinatensystem (RKS2) bezogenen Koordinaten mindestens einer der zweiten Aufpunkte (P2,P2',P2") mit den auf das erste Roboter-Koordinatensystem (RKS1) bezogenen Koordinaten eines der ersten Aufpunkte (P1,P1',P1") identisch sind.

8. Verfahren nach Anspruch 1 oder 2, **dadurch gekennzeichnet,**
**daß** die Anzahl der ersten und der zweiten Aufpunkte gleich ist und auf das zweite Roboter-Koordinatensystem (RKS2) bezogenen Koordinaten jedes der zweiten Aufpunkte (P2,P2',P2") mit den auf das erste Roboter-Koordinatensystem (RKS1) bezogenen Koordinaten jeweils eines der ersten Aufpunkte (P1,P1',P1") identisch sind.

9. Verfahren nach einem der Ansprüche 1 bis 4, **dadurch gekennzeichnet,**
**daß** die erste Relativposition bestimmt wird, indem aus den Positionen der ersten Aufpunkte (P1,P1',P1") bezüglich des Welt-Koordinatensystems (WKS) die Lage des Ursprungs (U1) des ersten Roboter-Koordinatensystems (RKS1) im Welt-Koordinatensystem (WKS) berechnet wird.

10. Verfahren nach Anspruch 1 oder 2 oder nach Anspruch 9 sowie einem der Ansprüche 1 oder 2, **dadurch gekennzeichnet,**
**dass** die zweite Relativposition bestimmt wird, indem aus der Position des zweiten Aufpunktes (P2) bzw. aus den Positionen der zweiten Aufpunkte (P2,P2',P2") bezüglich des Welt-Koordinatensystems (WKS) die Lage des Ursprungs (U2) des zweiten Roboter-Koordinatensystems (RKS2) im Welt-Koordinatensystem (WKS) berechnet wird.

11. Verfahren nach einem der Ansprüche 1 bis 10, **dadurch gekennzeichnet,**
**daß** dasselbe für verschiedene Paare von Standorten entlang der Roboter-Verfahrachse (1) wiederholt wird und die Ergebnisse dazu verwendet werden, eine gemittelte relative Orientierung der Roboter-Verfahrachse (1) gegenüber dem ersten Roboter-Koordinatensystem (RKS1) zu ermitteln.

12. Verfahren nach einem der Ansprüche 1 bis 10, **dadurch gekennzeichnet,**
**daß** dasselbe für verschiedene Paare von Standorten entlang der Roboter-Verfahrachse (1) wiederholt wird und die Ergebnisse dazu verwendet werden, die relative Orientierung der Roboter-Verfahrachse (1) gegenüber dem ersten Roboter-Koordinatensystem (RKS1) als Funktion des Standortes zu ermitteln.

## Claims

1. Method for determining the relative angular orientation of a robot travel axis (1) with respect to a first robot coordinate system (RKS1), said system being related to a robot (2) that can travel translatorily along the robot travel axis (1) between two locations (S1, S2) that are at a distance from each other when the robot (2) is at a first location (S1), and said system making a transition to a second robot coordinate system (RKS2) when the robot (2) is at the second location (S2), **characterized in that** a stationary world coordinate system (WKS) that is independent of the robot (2) is related to a coordinate measuring device (4) that is arranged outside of the robot (2), and, with respect to said world coordinate system (WKS), the first or second robot coordinate system (RKS1, RKS2) has a first or second relative orientation angularly and a first or second relative position laterally, whereby
a) at least three first space points (P1, P1', P1") that are at a distance from each other are associated with the first location (S1), the coordinates of said space points (P1, P1', P1") being prescribed or measured in the first robot coordinate system (RKS1),
b) the positions of the first space points (P1, P1', P1") are measured by means of the coordinate measuring device (4) with respect to the world coordinate system (WKS) and the first relative orientation and the first relative position are determined on the basis of the measured results thus obtained,
c) at least one second space point (P2) is associated with the second location (S2), the coordinates of said space point being prescribed or measured in the second robot coordinate system (RKS2),
d) the position of the second space point (P2) or of the second space points is measured by means of the coordinate measuring device (4) with respect to the world coordinate system (WKS) and the second relative position is determined on the basis of the measured results thus obtained, under the assumption that the first and second relative orientations are identical to each other,
e) the orientation (VAO) of the travel axis (1) in the world coordinate system (WKS) is determined by comparing the first and the second relative positions, and
f) the relative orientation of the travel axis (1) with respect to the first robot coordinate system (RKS1) is determined on the basis of the thus obtained orientation (VAO) of the travel axis (1) in the world coordinate system (WKS) as well as of the first relative orientation.

2. Method for determining the relative angular orientation of a robot travel axis (1) with respect to a first robot coordinate system (RKS1), said system being related to a robot (2) that can travel translatorily along the robot travel axis (1) between two locations (S1, S2) that are at a distance from each other when the robot (2) is at a first location (S1), and said system making a transition to a second robot coordinate system (RKS2) when the robot (2) is at the second location (S2), **characterized in that** a stationary world coordinate system (WKS) that is independent of the robot (2) is related to a coordinate measuring device (4) that is arranged outside of the robot (2), and, with respect to said world coordinate system (WKS), the first or second robot coordinate system (RKS1, RKS2) has a first or second relative orientation angularly and a first or second relative position laterally, whereby
a) at least three first space points (P1, P1', P1") that are at a distance from each other are associated with the first location (S1), the coordinates of said space points (P1, P1', P1") being prescribed or measured in the first robot coordinate system (RKS1),
b) the positions of the first space points (P1, P1', P1") are measured by means of the coordinate measuring device (4) with respect to the world coordinate system (WKS) and the first relative orientation and the first relative position are determined on the basis of the measured results thus obtained,
c) at least three second space points (P2, P2', P2") are associated with the second location (S2), the coordinates of said space points being prescribed or measured in the second robot coordinate system (RKS2),
d) the positions of the second space points (P2, P2', P2") or of the second space points are measured by means of the coordinate measuring device (4) with respect to the world coordinate system (WKS), whereby the second relative orientation and the second relative position are determined on the basis of the measured results thus obtained,
e) the orientation (VAO) of the travel axis (1) in the world coordinate system (WKS) is determined by comparing the first and the second relative positions, and
f) the relative orientation of the travel axis (1) with respect to the first robot coordinate system (RKS1) is determined on the basis of the thus obtained orientation (VAO) of the travel axis (1) in the world coordinate system (WKS) as well as of the first relative orientation.

3. Method for determining the relative angular orientation of a robot travel axis (1) with respect to a first robot coordinate system (RKS1), said system being related to a robot (2) that can travel translatorily along the robot travel axis (1) between two locations (S1, S2) that are at a distance from each other when the robot (2) is at a first location (S1), and said system making a transition to a second robot coordinate system (RKS2) when the robot (2) is at the second location (S2), **characterized in that** a stationary world coordinate system (WKS) that is independent of the robot (2) is related to a coordinate measuring device (4) that is arranged outside of the robot (2), and, with respect to said world coordinate system (WKS), the first or second robot coordinate system (RKS1, RKS2) has a first or second relative orientation angularly and a first or second relative position laterally, whereby
a) at least three first space points (P1, P1', P1") that are at a distance from each other are associated with the first location (S1), the coordinates of said space points (P1, P1', P1") being prescribed or measured in the first robot coordinate system (RKS1),
b) the positions of the first space points (P1, P1', P1") are measured by means of the coordinate measuring device (4) with respect to the world coordinate system (WKS) and the first relative orientation and the first relative position are determined on the basis of the measured results thus obtained,
c) a first track point (SP1) is associated with the first location and a second track point (SP2) is associated with the second location, whereby the position that the first track point (SP1) occupies in the first robot coordinate system (RKS1) is identical to the position that the second track point (SP2) assumes in the second robot coordinate system (RKS2),
d) the coordinates of the first and second track points are each measured by means of the coordinate measuring device (4) with respect to the world coordinate system (WKS),
e) the orientation (VAO) of the travel axis (1) in the world coordinate system (WKS) is determined by comparing the coordinates of the first and second track points (SP1, SP2) in the world coordinate system (WKS), and
f) the relative orientation of the travel axis (1) with respect to the first robot coordinate system (RKS1) is determined on the basis of the thus obtained orientation (VAO) of the travel axis (1) in the world coordinate system (WKS) as well as of the first relative orientation.

4. The method according to Claim 3, **characterized in that** the first track point coincides with the origin (U1) of the first robot coordinate system (RKS1) and the second track point coincides with the origin (U2) of the second robot coordinate system (RKS2).

5. Method for determining the relative angular orientation of a robot travel axis (1) with respect to a first robot coordinate system (RKS1), said system being related to a robot (2) that can travel translatorily along the robot travel axis (1) between two locations (S1, S2) that are at a distance from each other when the robot (2) is at a first location (S1), and said system making a transition to a second robot coordinate system (RKS2) when the robot (2) is at the second location (S2), **characterized in that** a stationary world coordinate system (WKS) that is independent of the robot (2) is related to a coordinate measuring device (4) that is arranged outside of the robot (2), and, with respect to said world coordinate system (WKS), the first or second robot coordinate system (RKS1, RKS2) has a first or second relative orientation angularly and a first or second relative position laterally, whereby
a) at least three first space points (P1, P1', P1") that are at a distance from each other are associated with the first location (S1), the coordinates of said space points (P1, P1', P1") being prescribed or measured in the first robot coordinate system (RKS1), and furthermore, at least a third space point is associated with the first location (S1), the coordinates of said space point(s) being prescribed or measured in the first robot coordinate system (RKS1),
b) the positions of the first space points (P1, P1', P1") are measured by means of the coordinate measuring device (4) with respect to the world coordinate system (WKS) and the first relative orientation and the first relative position are determined on the basis of the measured results thus obtained, and the position of the third space point or of the third space points is measured by means of the coordinate measuring device (4) with respect to the world coordinate system (WKS) and the first relative position is determined by means of the position of the third space point or of the third space points with respect to the world coordinate system (WKS),
c) at least one second space point (P2) is associated with the second location (S2), the coordinates of said space point being prescribed or measured in the second robot coordinate system (RKS2),
d) the position of the second space point (P2) or of the second space points is measured by means of the coordinate measuring device (4) with respect to the world coordinate system (WKS) and the second relative position is determined,
e) the orientation (VAO) of the travel axis (1) in the world coordinate system (WKS) is determined by comparing the first and the second relative positions, and
f) the relative orientation of the travel axis (1) with respect to the first robot coordinate system (RKS1) is determined on the basis of the thus obtained orientation (VAO) of the travel axis (1) in the world coordinate system (WKS) as well as of the first relative orientation.

6. The method according to Claim 5, **characterized in that**
at least one of the third space points is identical to at least one of the first space points.

7. The method according to Claim 1 or 2, **characterized in that**
the coordinates of at least one of the second space points (P2, P2', P2") that are related to the second robot coordinate system (RKS2) are identical to the coordinates of one of the first space points (P1, P1', P1") that are related to the first robot coordinate system (RKS1).

8. The method according to Claim 1 or 2, **characterized in that**
the number of first and second space points is the same and coordinates of each of the second space points (P2, P2', P2") that are related to the second robot coordinate system (RKS2) are identical to the coordinates of each of the first space points (P1, P1', P1") that are related to the first robot coordinate system (RKS1).

9. The method according to any of Claims 1 to 4, **characterized in that**
the first relative position is determined **in that** the position of the origin (U1) of the first robot coordinate system (RKS1) in the world coordinate system (WKS) is computed on the basis of the positions of the first space points (P1, P1', P1") with respect to the world coordinate system (WKS).

10. The method according to Claim 1 or 2 or according to Claim 9 as well as either Claim 1 or 2, **characterized in that**
the second relative position is determined **in that** the position of the origin (U2) of the second robot coordinate system (RKS2) in the world coordinate system (WKS) is computed on the basis of the position of the second space point (P2) or on the basis of the positions of the second space points (P2, P2', P2") with respect to the world coordinate system (WKS).

11. The method according to any of Claims 1 to 10,
**characterized in that** the same procedure is repeated for various pairs of locations along the robot travel axis (1) and the results are used in order to determine a mean relative orientation of the robot travel axis (1) with respect to the first robot coordinate system (RKS1).

12. The method according to any of Claims 1 to 10,
**characterized in that** the same procedure is repeated for various pairs of locations along the robot travel axis (1) and the results are used in order to determine the relative orientation of the robot travel axis (1) with respect to the first robot coordinate system (RKS1) as a function of the location.

## Revendications

1. Procédé pour déterminer l'orientation angulaire relative de l'axe de déplacement d'un robot (1) par rapport à un premier système de coordonnées du robot (RKS1), lequel se rapporte à un robot (2) déplaçable dans un sens translatoire entre deux emplacements (S1,S2) espacés l'un de l'autre le long de l'axe de déplacement du robot (1) lorsque celui-ci se trouve sur un premier emplacement (S1) et lequel passe à un deuxième système de coordonnées du robot (RSK2) lorsque le robot (2) se trouve sur un deuxième emplacement (S2), **caractérisé en ce que**, un système de coordonnées mondial (WKS) fixe indépendant du robot (2) se rapporte à un système de mesure de coordonnées (4) disposé en dehors du robot (2), système de coordonnées mondial fixe par rapport auquel le premier ou le deuxième système de coordonnées du robot (RKS1,RKS2) présente angulairement une première ou une deuxième orientation relative et latéralement une première ou une deuxième orientation relative, dans lequel
a) au moins trois premiers points spatiaux (P1,P1',P1") espacés les uns des autres, dont les coordonnées sont définies ou sont mesurées dans le premier système de coordonnées du robot (RKS1) sont attribués au premier emplacement (S1),
b) les positions des premiers points spatiaux (P1,P1',P1") sont mesurées par rapport au système de coordonnées mondial (WKS) au moyen de l'appareil de mesure des coordonnées (4) et on détermine, à partir des résultats de mesure ainsi obtenus, la première orientation relative et la première position relative,
c) au moins un deuxième point spatial (P2) dont les coordonnées sont définies ou sont mesurées dans le deuxième système de coordonnées, est attribué au deuxième emplacement (S2),
d) la position du deuxième point spatial (P2) ou des deuxièmes points spatiaux est mesurée par rapport au système de coordonnées mondial (WKS) au moyen de l'appareil de mesure des coordonnées (4) et, à l'aide des résultats de mesure ainsi obtenus, on détermine la deuxième position relative, supposant que la première et la deuxième orientation relative sont identiques entre elles,
e) l'orientation (VAO) de l'axe de déplacement (1) dans le système de coordonnées mondial (WKS) est déterminée à partir de la comparaison entre la première et la deuxième position relative et,
f) à partir de l'orientation (VAO) de l'axe de déplacement (1) dans le système de coordonnées mondial (WKS) ainsi obtenue, ainsi que de la première orientation relative, on détermine l'orientation relative de l'axe de déplacement (1) par rapport au premier système de coordonnées du robot (RKS1).

2. Procédé pour déterminer l'orientation angulaire relative de l'axe de déplacement d'un robot (1) par rapport à un premier système de coordonnées du robot (RKS1), lequel se rapporte à un robot (2) déplaçable dans un sens translatoire entre deux emplacements (S1,S2) espacés l'un de l'autre le long de l'axe de déplacement du robot (1) lorsque ce dernier se trouve sur un premier emplacement (S1) et lequel passe à un deuxième système de coordonnées du robot (RKS2) lorsque le robot (2) se trouve sur un deuxième emplacement (S2), **caractérisé en ce que**, un système de coordonnées mondial (WKS) fixe indépendant du robot (2) se rapporte à un système de mesure de coordonnées (4) disposé en dehors du robot (2), système de coordonnées mondial fixe par rapport auquel le premier ou le deuxième système de coordonnées du robot (RKS1,RKS2) présente angulairement une première ou une deuxième orientation relative et latéralement une première ou une deuxième orientation relative, dans lequel
a) au moins trois premiers points spatiaux (P1,P1',P1") espacés les uns des autres, dont les coordonnées sont définies ou sont mesurées dans le premier système de coordonnées du robot (RKS1) sont attribués au premier emplacement (S1),
b) les positions des premiers points spatiaux (P1,P1',P1") sont mesurées par rapport au système de coordonnées mondial (WKS) au moyen de l'appareil de mesure des coordonnées (4) et on détermine, à partir des résultats de mesure ainsi obtenus, la première orientation relative et la première position relative,
c) au moins trois deuxièmes points spatiaux (P2,P2',P2") dont les coordonnées sont définies ou sont mesurées dans le deuxième système de coordonnées (RKS2), sont attribués au deuxième emplacement (S2),
d) les positions des deuxièmes points spatiaux (P2,P2',P2") sont mesurées par rapport au système de coordonnées mondial (WKS) au moyen de l'appareil de mesure des coordonnées (4), la deuxième orientation relative et la deuxième position relative étant déterminées à partir des résultats de mesure ainsi obtenus.
e) l'orientation (VAO) de l'axe de déplacement (1) dans le système de coordonnées mondial (WKS) est déterminée à partir de la comparaison entre la première et la deuxième position relative et,
f) à partir de l'orientation (VAO) de l'axe de déplacement (1) dans le système de coordonnées mondial (WKS) ainsi obtenue, ainsi que de la première orientation relative, on détermine l'orientation relative de l'axe de déplacement (1) par rapport au premier système de coordonnées de robot (RKS1).

3. Procédé pour déterminer l'orientation angulaire relative de l'axe de déplacement d'un robot (1) par rapport à un premier système de coordonnées du robot (RKS1), lequel se rapporte à un robot (2) déplaçable dans un sens translatoire entre deux emplacements (S1,S2) espacés l'un de l'autre le long de l'axe de déplacement du robot (1) lorsque ce dernier se trouve sur un premier emplacement (S1) et lequel passe à un deuxième système de coordonnées du robot (RKS2) lorsque le robot (2) se trouve sur un deuxième emplacement (S2), **caractérisé en ce qu'**un système de coordonnées mondial (WKS) fixe indépendant du robot (2) se rapporte à un système de mesure de coordonnées (4) disposé en dehors du robot (2), système de coordonnées mondial fixe par rapport auquel le premier ou le deuxième système de coordonnées du robot (RKS1,RKS2) présente angulairement une première ou une deuxième orientation relative et latéralement une première ou une deuxième orientation relative, dans lequel
a) au moins trois premiers points spatiaux (P1,P1',P1") espacés les uns des autres, dont les coordonnées sont définies ou sont mesurées dans le premier système de coordonnées du robot (RKS1) sont attribués au premier emplacement (S1),
b) les positions des premiers points spatiaux (P1,P1',P1") sont mesurées par rapport au système de coordonnées mondial (WKS) au moyen de l'appareil de mesure des coordonnées (4) et on détermine, à partir des résultats de mesure ainsi obtenus, la première orientation relative et la première position relative,
c) un premier et un deuxième point de trace du robot (SP1,SP2) sont attribués respectivement au premier et au deuxième emplacement, la position que le premier point de trace (SP1) prend dans le premier système de coordonnées du robot (RKS1) étant identique à celle que le deuxième point de trace (SP2) occupe dans le deuxième système de coordonnées du robot (RKS2),
d) les coordonnées du premier et du deuxième point de trace du robot sont mesurées respectivement au moyen de l'appareil de mesure des coordonnées (4) par rapport au système de coordonnées mondial (WKS),
e) l'orientation (VAO) de l'axe de déplacement (1) dans le système de coordonnées mondial (WKS) est déterminée par la comparaison des coordonnées du premier et du deuxième point de trace (SP1,SP2) dans le système de coordonnées mondial (WKS), et
f) à partir de l'orientation (VAO) de l'axe de déplacement (1) dans le système de coordonnées mondial (WKS) ainsi obtenue, ainsi que de la première orientation relative, on détermine l'orientation relative de l'axe de déplacement (1) par rapport au premier système de coordonnées du robot (RKS1).

4. Procédé selon la revendication 3, **caractérisé en ce que**
le premier point de trace coïncide avec l'origine (U1) du premier système de coordonnées du robot (RKS1) et le deuxième point de trace avec l'origine (U2) du deuxième système de coordonnées du robot (RKS2).

5. Procédé pour déterminer l'orientation angulaire relative de l'axe de déplacement d'un robot (1) par rapport à un premier système de coordonnées du robot (RKS1), lequel se rapporte à un robot (2) déplaçable dans un sens translatoire entre deux emplacements (S1,S2) espacés l'un de l'autre le long de l'axe de déplacement du robot (1) lorsque celui-ci se trouve sur un premier emplacement (S1) et lequel passe à un deuxième système de coordonnées de robot (RSK2) lorsque le robot (2) se trouve sur un deuxième emplacement (S2), **caractérisé en ce qu'**un système de coordonnées mondial (WKS) fixe indépendant du robot (2) se rapporte à un système de mesure de coordonnées (4) disposé en dehors du robot (2), système de coordonnées mondial fixe par rapport auquel le premier ou le deuxième système de coordonnées du robot (RKS1,RKS2) présente angulairement une première ou une deuxième orientation relative et latéralement une première ou une deuxième orientation relative, dans lequel
a) au moins trois premiers points spatiaux (P1,P1',P1") espacés les uns des autres, dont les coordonnées sont définies ou sont mesurées dans le premier système de coordonnées du robot (RKS1) sont attribués au premier emplacement (S1), et de surcroît au moins un troisième point spatial dont les coordonnées sont définies ou sont mesurées dans le premier système de coordonnées du robot (RKS1) est attribué au premier emplacement S1,
b) les positions des premiers points spatiaux (P1,P1',P1") sont mesurées par rapport au système de coordonnées mondial (WKS) au moyen de l'appareil de mesure des coordonnées (4) et on mesure, à partir des résultats de mesure ainsi obtenus, la première orientation relative, et la position du troisième point spatial ou des troisièmes points spatiaux est mesurée par rapport au système de coordonnées mondial (WKS) à l'aide de l'appareil de mesure des coordonnées (4) et la première position relative est déterminée à l'aide de la position du troisième point spatial ou des positions des troisièmes points spatiaux par rapport au système de coordonnées mondial (WKS),
c) au moins un deuxième point spatial (P2) dont les coordonnées sont définies ou sont mesurées dans le deuxième système de coordonnées, est attribué au deuxième emplacement (S2),
d) la position du deuxième point spatial (P2) ou des deuxièmes points spatiaux est mesurée par rapport au système de coordonnées mondial (WKS) au moyen de l'appareil de mesure des coordonnées (4) et, à l'aide des résultats de mesure ainsi obtenus, on détermine la deuxième position relative,
e) l'orientation (VAO) de l'axe de déplacement (1) dans le système de coordonnées mondial (WKS) est déterminée à partir de la comparaison entre la première et la deuxième position relative et,
f) à partir de l'orientation (VAO) de l'axe de déplacement (1) dans le système de coordonnées mondial (WKS), ainsi que de la première orientation relative, on détermine l'orientation relative de l'axe de déplacement (1) par rapport au premier système de coordonnées du robot (RKS1).

6. Procédé selon la revendication 5, **caractérisé en ce que**
au moins l'un des troisièmes points spatiaux est identique à au moins l'un des premiers points spatiaux.

7. Procédé selon la revendication 1 ou 2, **caractérisé en ce que**
les coordonnées d'au moins l'un des deuxièmes points spatiaux (P2,P2',P2") rapportées au deuxième système de coordonnées du robot (RKS2) sont identiques aux coordonnées de l'un des premiers points spatiaux (P1,P1',P1") rapportées au premier système de coordonnées du robot (RSK1).

8. Procédé selon la revendication 1 ou 2, **caractérisé en ce que**
le nombre des premiers et des deuxièmes points spatiaux est le même et les coordonnées rapportées au deuxième système de coordonnées de robot (RSK2) de chacun des deuxièmes points spatiaux (P2,P2',P2") sont identiques aux coordonnées rapportées au système de coordonnées de robot (RSK1) de respectivement chacun des premiers points spatiaux (P1,P1',P1").

9. Dispositif selon l'une des revendications 1 à 4, **caractérisé en ce que**
la première position relative est déterminée dans la mesure où la position de l'origine (U1) du premier système de coordonnées du robot (RKS1) dans le système de coordonnées mondial (WKS) est calculée à partir des positions des premiers points spatiaux (P1,P1',P1") par rapport au premier système de coordonnées mondial (WKS).

10. Procédé selon la revendication 1 ou 2 ou selon la revendication 9, ainsi que selon l'une des revendications 1 ou 2, **caractérisé en ce que**
la deuxième position relative est déterminée dans la mesure où la position de l'origine (U2) du deuxième système de coordonnées du robot (RKS2) dans le deuxième système de coordonnées mondial (WKS) est calculée à partir de la position du deuxième point spatial (P2) ou des positions des deuxièmes points spatiaux (P2,P2',P2") par rapport au deuxième système de coordonnées mondial (WKS).

11. Procédé selon l'une des revendications 1 à 10, **caractérisé en ce que**
celui-ci se répète pour différentes paires d'emplacements le long de l'axe de déplacement du robot (1) et que les résultats sont utilisés afin de déterminer une orientation relative moyenne de l'axe de déplacement du robot (1) par rapport au premier système de coordonnées du robot (RKS1).

12. Procédé selon l'une des revendications 1 à 10, **caractérisé en ce que**
celui-ci se répète pour différentes paires d'emplacements le long de l'axe de déplacement du robot (1) et que les résultats sont utilisés afin de déterminer l'orientation relative de l'axe de déplacement du robot (1) par rapport au premier système de coordonnées du robot (RKS1) en tant que fonction de l'emplacement.
